(19) Europäisches Patentamt
European Patent Office
Office européen des brevets

(11) EP 2 824 148 B1

(12) # EUROPÄISCHE PATENTSCHRIFT

(45) Veröffentlichungstag und Bekanntmachung des Hinweises auf die Patenterteilung:
**11.01.2017 Patentblatt 2017/02**

(21) Anmeldenummer: **14167029.9**

(22) Anmeldetag: **10.07.2008**

(51) Int Cl.:
***C09C 1/30*** *(2006.01)* ***C09C 1/36*** *(2006.01)*
***C09C 1/40*** *(2006.01)* ***C09C 3/12*** *(2006.01)*
***G03G 9/097*** *(2006.01)* ***B82Y 30/00*** *(2011.01)*

(54) **Hochdisperse Kieselsäure mit einer hohen positiven Oberflächenladung**

Highly disperse silica having a high positive surface charge

Silice à forte dispersion ayant une charge superficielle fortement positive

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **18.07.2007 DE 102007033448**

(43) Veröffentlichungstag der Anmeldung:
**14.01.2015 Patentblatt 2015/03**

(62) Dokumentnummer(n) der früheren Anmeldung(en) nach Art. 76 EPÜ:
**08774983.4 / 2 167 588**

(73) Patentinhaber: **Wacker Chemie AG**
**81737 München (DE)**

(72) Erfinder:
- **Gottschalk-Gaudig, Torsten**
**84561 Mehring (DE)**
- **Völkel, Ute**
**84489 Burghausen (DE)**

(74) Vertreter: **Fritz, Helmut et al**
**Wacker Chemie AG**
**Intellectual Property**
**Hanns-Seidel-Platz 4**
**81737 München (DE)**

(56) Entgegenhaltungen:
**EP-A- 0 609 870 EP-A- 1 138 724**
**US-A- 4 618 556 US-A- 4 973 540**
**US-A- 5 102 763 US-A- 5 665 511**

Bemerkungen:
Die Akte enthält technische Angaben, die nach dem Eingang der Anmeldung eingereicht wurden und die nicht in dieser Patentschrift enthalten sind.

EP 2 824 148 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft Metalloxide, die eine hohe positive Oberflächenladung aufweisen und deren Verwendung.

Die Oberflächenladungseigenschaften von partikulären Metalloxiden sind wichtige Eigenschaften beim Einsatz dieser Stoffe zur Steuerung der Fließeigenschaften und triboelektrischen Ladung in Tonern, Entwicklern und Pulverlacken.

Partikuläre Metalloxide mit elektrostatisch positiver Aufladbarkeit werden vor allem als Bestandteile von Entwicklern und Tonern zur Sichtbarmachung von negativen elektrostatischen Ladungsbildern eingesetzt. Voraussetzung ist dabei eine hohe, stabile, gleichmäßige positive triboelektrische Aufladbarkeit besagter Partikel.

Partikuläre Metalloxide mit elektrostatisch positiver Aufladbarkeit werden vor allem als Bestandteile von Pulverlacken zur Steuerung der Aufladung bei der triboelektrischen Applikation von Pulverlacken eingesetzt. Voraussetzung ist dabei eine hohe, stabile, gleichmäßige positive triboelektrische Aufladbarkeit besagter Partikel.

Partikuläre Metalloxide mit elektrostatisch negativer Aufladbarkeit werden vor allem als Bestandteile von Entwicklern und Tonern zur Sichtbarmachung von positiven elektrostatischen Ladungsbildern eingesetzt. Voraussetzung ist dabei eine hohe, stabile, gleichmäßige negative triboelektrische Aufladbarkeit besagter Partikel.

Partikuläre Metalloxide mit elektrostatisch negativer Aufladbarkeit werden vor allem als Bestandteile von Pulverlacken zur Steuerung der Pulverfließeigenschaften bei der Applikation mittels Corona-Prozess eingesetzt.

Das Vorzeichen, der Betrag und die Dichte der Oberflächenladung partikulärer Metalloxide werden maßgeblich durch die chemische Struktur der Partikeloberfläche bestimmt. Im Falle von Metalloxiden wie Siliziumdioxiden, Aluminiumoxiden oder Titandioxiden sind oberflächliche Hydroxylgruppen die ladungsbestimmenden Gruppen, wobei die Säurestärke der Metall-Hydroxygruppen maßgeblich das Ladungsvorzeichen und die Oberflächenladungsdichte beeinflußt. So sind unmodifizierte Kieselsäuren bzw. mit Alkylsiloxygruppen modifizierte Metalloxide triboelektrisch negativ aufladbare Partikel.

Zur Erzeugung positiver triboelektrischer Ladungen können wie z.B. in DE 33 30 380 beschrieben, beispielsweise Aminosilane chemisch auf der Partikeloberfläche fixiert werden. Die mit derartig modifizierten Partikeln erzielten positiven triboelektrischen Aufladungen sind jedoch betragsmäßig eher gering und stark von den Umgebungsbedingungen wie z.B. der Luftfeuchtigkeit abhängig.

Eine stabilere triboelektrische Aufladung läßt sich durch eine zusätzliche Hydrophobierung der Partikel erzielen, wie z.B. in DE 33 30 380 oder DE 37 07 226 beschrieben. Jedoch ist auch in diesen Fällen der Betrag der positiven triboelektrischen Aufladung häufig gering.

Aufgabe der Erfindung war es, die Nachteile des Stands der Technik zu überwinden und insbesondere partikuläre Metalloxide, die eine hohe positive und stabile triboelektrische Aufladung aufweisen, zur Verfügung zu stellen.

Die Aufgabe wird durch die Erfindung gelöst.

Gegenstand der Erfindung sind pyrogene Kieselsäuren, die mit Gruppen der allgemeinen Formel (I)

$$-O_{1+n}-Si(OR^1)_{2-n}-R^2-NR^3_2 \qquad (I)$$

modifiziert sind, wobei
n 0, 1, 2 sein kann, wobei

**$R^1$** ein Wasserstoffatom oder ein C-O gebundener $C_1$-$C_{15}$-Kohlenwasserstoff-Rest, oder ein Acetylrest sein kann,
**$R^2$** eine Methylengruppe ($-CH_2-$), Ethylengruppe ($-C_2H_4-$), 1,3-Propylgruppe ($-C_3H_6-$) oder Phenylengruppe ($-C_6H_4-$)

**$R^3$** ein Wasserstoffatom oder einen gegebenenfalls mit -CN, -NCO, $-NR^4_2$, -COOH, $-COOR^4$, -Halogen, -Acryl,-Epoxy, -SH, -OH oder $-CONR^4_2$ substituierter, gegebenenfalls einfach oder mehrfach ungesättigter N-C gebundener, einwertiger, gegebenenfalls zweiwertiger, $C_1$-$C_{20}$-Kohlenwasserstoffrest, oder ein Arylrest, oder $C_1$-$C_{15}$-Kohlenwasserstoffoxyrest sein kann, in denen jeweils eine oder mehrere, einander nicht benachbarte Methyleneinheiten durch Gruppen -O-, -CO-, -COO-, -OCO-, oder -OCOO-, -S-, oder $-NR^4-$ ersetzt sein können und in denen eine oder mehrere, einander nicht benachbarte Methineinheiten durch Gruppen, -N=,-N=N-, oder -P= ersetzt sein können, wobei $R^3$ gleich oder verschieden sein kann, oder die Amingruppe-$N(R^3)_2$ auch Teil eines aliphatischen oder aromatischen Heterocyclus sein kann,
**$R^4$** die gleiche Bedeutung wie $R^1$ hat und $R^4$ gleich oder verschieden sein kann,

dadurch gekennzeichnet, dass sie eine positive triboelektrische Oberflächenladung $q_{trib}$ von +50 µC/g bis +1000 µC/g und eine relative Abnahme der triboelektrischen Oberflächenladung ($q_{trib}(3600)$ - $q_{trib}(150)$) x 100% / $q_{trib}(150)$ von maximal 60% aufweisen, wobei $q_{trib}(3600)$ die triboelektrische Oberflächenladung nach 3600 s Aktivierungszeit und $q_{trib}(150)$ die triboelektrische Oberflächenladung nach 150 s Aktivierungszeit eines Gemisches aus einem Tonerpulver und des erfindungsgemäßen Metalloxids bedeutet und $q_{trib}(150)$ größer 0 sein muss, wobei das Gemisch vor der Messung

5 d bei 32 °C und 80% rel. Luftfeuchtigkeit gelagert wurde,
wobei die triboelektrische Oberflächenladung und deren relative Abnahme wie in der Beschreibung definiert bestimmt wurde,
-wobei der Anteil der Summe der NMR-Signalintensitäten der $T^1$- und $T^2$-Gruppen an der Gesamtintensität der T-Gruppen $T^1 + T^2 + T^3$ mindestens 20% beträgt, wobei die T Gruppen als
$T^2$: R-Si($OR^1$)2-O-Si
$T^2$: R-Si($OR^1$) (-O-Si)$_2$
$T^3$: R-Si(-O-Si)$_3$,
definiert sind, wobei sich der relative Anteil der $T^1$-, $T^2$- und $T^3$-Gruppen durch Festkörper-NMR-Spektroskopie im $^{29}$Si-CPMAS-Modus bestimmen lässt,
wobei R eine organische Gruppe ist und $R^1$ ein Wasserstoffatom oder ein C-O gebundener $C_1$-$C_{15}$-Kohlenwasserstoff-Rest oder ein Acetylrest ist,
herstellbar in einem Verfahren, in dem die Modifikation der Kieselsäuren mit Aminosilanen der allgemeinen Formel II

$$X_{1+n}Si(OR^1)_{2-n}-R^2-NR^3_2 \qquad (II)$$

in einer Menge von 1 Gew.-% bis 20 Gew-%, bezogen auf die Kieselsäure, pro einer eingesetzten hydrophilen KieselsäureOberfläche von 100 $m^2$/g BET-Oberfläche wasserfrei erfolgt, wobei $R^1$, $R^2$, $R^3$, $R^4$ und n die oben genannte Bedeutung haben, $R^1$ und $R^4$ identisch sein können und X = Halogen, Stickstoffrest, $OR^4$, $OCOR^4$, $O(CH_2)_xOR^4$ und x = 1, 2, 3,
wobei die Belegung der Kieselsäure bei Temperaturen von 20 bis 80 °C erfolgt, bei einem Temperaturgradient im Bereich von 40 °C bis 180 °C zur Reaktion gebracht wird, wobei dies bedeutet, dass die Produkttemperatur zu Beginn der Reaktion ihn einem Bereich von 40 - 100 °C und weiterhin, dass die Produkttemperatur gegen Ende der Reaktion in einem Bereich von 80 - 180 °C liegt, mit der Maßgabe, dass die Produkttemperatur zu Beginn der Reaktion niedriger als gegen Ende der Reaktion ist, wobei die Reaktionstemperatur stufenweise erhöht wird und die Verweilzeit pro Reaktionstemperatur zwischen 5 min und 240 min liegt und der Temperaturgradient abhängig vom Ort (kontinuierlich) oder abhängig von der Zeit (diskontinuierlich) ist und die Abreinigung bei einer Reinigungstemperatur von 20 bis 200 °C erfolgt.
Dabei war erstaunlich und für den Fachmann in keiner Weise vorherzusehen, daß sich durch eine Steuerung des Verhältnisses der $T^1$- : $T^2$- : $T^3$-Gruppen der ladungsbestimmenden Aminosilane hohe positive triboelektrische Aufladungen erhalten lassen. Unter einer T-Gruppe versteht man eine Monoalkyltrisiloxygruppe R-Si(O-)$_3$, wobei die hochgestellte Zahl die Anzahl an Siloxanbindungen wiedergibt. D.h.

$T^1$: R-Si(OR')$_2$-O-Si
$T^2$: R-Si(OR')(-O-Si)$_2$
$T^3$: R-Si(-O-Si)$_3$,

wobei R' Alkylgruppe oder Wasserstoffatom sein kann.
Die erfindungsgemäßen pyrogenen Kieselsäuren sind mit Gruppen der allgemeinen Formel (I)

$$-O_{1+n}-Si(OR^1)_{2-n}-R^2-NR^3_2 \qquad (I)$$

modifiziert, wobei
n 0, 1, 2 sein kann, wobei

**$R^1$** ein Wasserstoffatom oder ein C-O gebundener $C_1$-$C_{15}$-Kohlenwasserstoff-Rest, bevorzugt ein $C_1$-$C_8$ Kohlenwasserstoff-Rest, besonders bevorzugt ein $C_1$-$C_3$-Kohlenwasserstoff-Rest, oder ein Acetylrest sein kann,
**$R^2$** eine Methylengruppe (-$CH_2$-), Ethylengruppe (-$C_2H_4$-), 1,3-Propylgruppe (-$C_3H_6$-) oder Phenylengruppe (-$C_6H_4$-)

**$R^3$** ein Wasserstoffatom oder einen gegebenenfalls mit -CN, -NCO, -$NR^4_2$, -COOH, -$COOR^4$, -Halogen, -Acryl,-Epoxy, -SH, -OH oder -$CONR^4_2$ substituierter, gegebenenfalls einfach oder mehrfach ungesättigter N-C gebundener, einwertiger, gegebenenfalls zweiwertiger, $C_1$-$C_{20}$-Kohlenwasserstoffrest, bevorzugt ein $C_1$-$C_8$-Kohlenwasserstoff-Rest, besonders bevorzugt ein $C_1$-$C_3$-Kohlenwasserstoff-Rest, oder ein Arylrest, oder $C_1$-$C_{15}$-Kohlenwasserstoffoxyrest, bevorzugt ein $C_1$-$C_8$-Kohlenwasserstoffoxy-Rest, besonders bevorzugt ein $C_1$-$C_4$-Kohlenwasserstoffoxy-Rest sein kann, in denen jeweils eine oder mehrere, einander nicht benachbarte Methyleneinheiten durch Gruppen -O-, -CO-, -COO-, -OCO-, oder -OCOO-, -S-, oder -$NR^4$- ersetzt sein können und in denen eine oder mehrere, einander nicht benachbarte Methineinheiten durch Gruppen, -N=,-N=N-,oder -P= ersetzt sein können, wobei $R^3$ gleich oder verschieden sein kann, oder die Amingruppe -N($R^3$)$_2$ auch Teil eines aliphatischen oder aromatischen Heterocyclus sein kann, wie z.B. eines Pyridin-Rests, eines N-Alkyl-Imidazol-Rests wie N-Methyl-Imidazol-Rests, N-Alkyl-Morpholin-Rests, wie N-Methyl-Morpholin-Rest,

**$R^4$** die gleiche Bedeutung wie $R^1$ hat und $R^4$ gleich oder verschieden sein kann.

Bevorzugte Gruppen $R^1$ sind das Wasserstoffatom oder Alkylgruppen wie die Methyl-, die Ethyl, die Propyl-, wie die n-Propyl- oder i-Propylgruppe, die Hexyl-, wie die n-Hexyl- oder i-Hexylgruppe oder die Acetoxygruppe.

Bevorzugte Gruppen $R^3$ sind das Wasserstoffatom, Alkylgruppen wie die Methyl-, die Ethyl, die Propyl-, wie die n-Propyl- oder i-Propylgruppe, die Butylgruppe, wie die n-Butyl- oder i-Butylgruppe, die Pentylgruppe, die Hexyl-, wie die n-Hexyl- oder i-Hexylgruppe, die Octylgruppe, wie die n-Octyl- oder i-Octylgruppe, cycloaliphatische Gruppen wie die Cyclopentyl- oder die Cyclohexylgruppe, aromatische Ringe wie der Phenylring, oder N-substituierte Reste wie der Aminoethylrest ($NH_2$-$C_2H_4$-) oder der n-Butylaminoethylrest (BuNH-$C_2H_4$-).

Besonders bevorzugte Gruppen der allgemeinen Formel (I) sind

$(-O)_{1+n}Si(OCH_3)_{2-n}-CH_2-N(C_2H_5)_2$
$(-O)_{1+n}Si(OC_2H_5)_{2-n}-CH_2-N(C_2H_5)_2$
$(-O)_{1+n}Si(OH)_{2-n}-CH_2-N(C_2H_5)_2$
$(-O)_{1+n}Si(OCH_3)_{2-n}-CH_2-N(C_4H_9)2$
$(-O)_{1+n}Si(OC_2H_5)_{2-n}-CH_2-N(C_4H_9)_2$
$(-O)_{1+n}Si(OH)_{2-n}-CH_2-N(C_4H_9)_2$
$(-O-)_{1+n}Si(OCH_3)_{2-n}-CH_2-NH(C_6H_5)$
$(-O)_{1+n}Si(OC_2H_5)_{2-n}-CH_2-NH(C_6H_5)$
$(-O-)_{1+n}Si(OH)_{2-n}-CH_2-NH(C_6H_5)$
$(-O-)_{1+n}Si(OCH_3)_{2-n}-CH_2-NH(C_6H_{11})$
$(-O)_{1+n}Si(OC_2H_5)_{2-n}-CH_2-NH(C_6H_{11})$
$(-O)_{1+n}Si(OH)_{2-n}-CH_2-NH(C_6H_{11})$

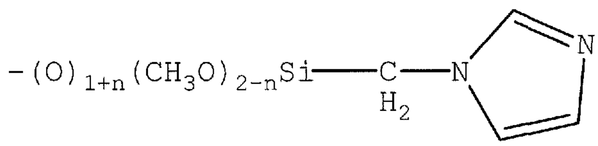
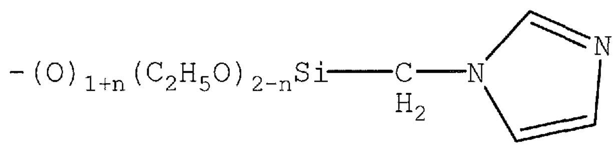

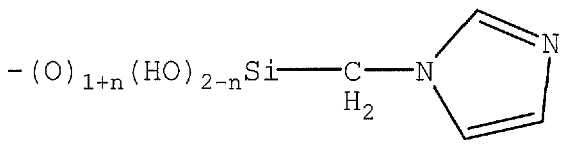

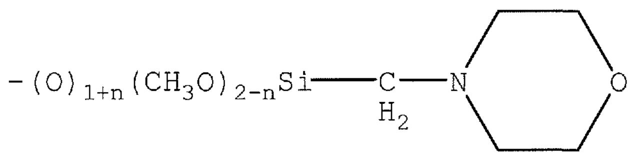

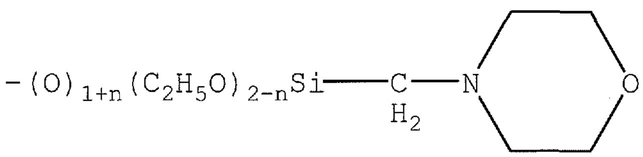

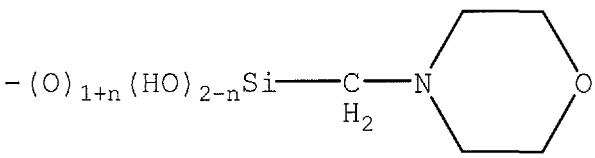

$(-O)_{1+n}Si(OCH_3)_{2-n}-C_3H_6-NH_2$
$(-O)_{1+n}Si(OC_2H_5)_{2-n}-C_3H_6-NH_2$
$(-O)_{1+n}Si(OH)_{2-n}-C_3H_6-NH_2$

$(\text{-O})_{1+n}\text{Si}(\text{OCH}_3)_{2\text{-n}}\text{-C}_3\text{H}_6\text{-NH}(\text{CH}_3)$
$(\text{-O})_{1+n}\text{Si}(\text{OC}_2\text{H}_5)_{2\text{-n}}\text{-C}_3\text{H}_6\text{-NH}(\text{CH}_3)$
$(\text{-O})_{1+n}\text{Si}(\text{OH})_{2\text{-n}}\text{-C}_3\text{H}_6\text{-NH}(\text{CH}_3)$
$(\text{-O})_{1+n}\text{Si}(\text{OCH}_3)_{2\text{-n}}\text{-C}_3\text{H}_6\text{-N}(\text{CH}_3)_2$
$(\text{-O})_{1+n}\text{Si}(\text{OC}_2\text{H}_5)_{2\text{-n}}\text{-C}_3\text{H}_6\text{-N}(\text{CH}_3)_2$
$(\text{-O})_{1+n}\text{Si}(\text{OH})_{2\text{-n}}\text{-C}_3\text{H}_6\text{-N}(\text{CH}_3)_2$
$(\text{-O})_{1+n}\text{Si}(\text{OCH}_3)_{2\text{-n}}\text{-C}_3\text{H}_6\text{-NH}(\text{C}_2\text{H}_5)$
$(\text{-O})_{1+n}\text{Si}(\text{OC2H5})_{2\text{-n}}\text{-C3H}_6\text{-NH}(\text{C}_2\text{H}_5)$
$(\text{-O})_{1+n}\text{Si}(\text{OH})_{2\text{-n}}\text{-C}_3\text{H}_6\text{-NH}(\text{C}_2\text{H}_5)$
$(\text{-O})_{1+n}\text{Si}(\text{OCH}_3)_{2\text{-n}}\text{-C}_3\text{H}_6\text{N}(\text{C}_2\text{H}_5)_2$
$(\text{-O})_{1+n}\text{Si}(\text{OC}_2\text{H}_5)_{2\text{-n}}\text{-C}_3\text{H}_6\text{-N}(\text{C}_2\text{H}_5)_2$
$(\text{-O})_{1+n}\text{Si}(\text{OH})_{2\text{-n}}\text{-C}_3\text{H}_6\text{-N}(\text{C}_2\text{H}_5)_2$
$(\text{-O})_{1+n}\text{Si}(\text{OCH}_3)_{2\text{-n}}\text{-C}_3\text{H}_6\text{-NH}(\text{C}_6\text{H}_{11})$
$(\text{-O})_{1+n}\text{Si}(\text{OC}_2\text{H}_5)_{2\text{-n}}\text{-C}_3\text{H}_6\text{-NH}(\text{C}_6\text{H}_{11})$
$(\text{-O})_{1+n}\text{Si}(\text{OH})_{2\text{-n}}\text{-C}_3\text{H}_6\text{-NH}(\text{C}_6\text{H}_{11})$
$(\text{-O})_{1+n}\text{Si}(\text{OCH}_3)_{2\text{-n}}\text{-C}_3\text{H}_6\text{-NH}(\text{C}_6\text{H}_5)$
$(\text{-O})_{1+n}\text{Si}(\text{OC}_2\text{H}_5)_{2\text{-n}}\text{-C}_3\text{H}_6\text{-NH}(\text{C}_6\text{H}_5)$
$(\text{-O})_{1+n}\text{Si}(\text{OH})_{2\text{-n}}\text{-C}_3\text{H}_6\text{-NH}(\text{C}_6\text{H}_5)$
$(\text{-O})_{1+n}\text{Si}(\text{OCH}_3)_{2\text{-n}}\text{-C}_3\text{H}_6\text{-NH}(\text{C}_4\text{H}_9)$
$(\text{-O})_{1+n}\text{Si}(\text{OC}_2\text{H}_5)_{2\text{-n}}\text{-C}_3\text{H}_6\text{-NH}(\text{C}_4\text{H}_9)$
$(\text{-O})_{1+n}\text{Si}(\text{OH})_{2\text{-n}}\text{-C}_3\text{H}_6\text{-NH}(\text{C}_4\text{H}_9)$
$(\text{-O})_{1+n}\text{Si}(\text{OCH}_3)_{2\text{-n}}\text{-C}_3\text{H}_6\text{-N}(\text{C}_4\text{H9})_2$
$(\text{-O})_{1+n}\text{Si}(\text{OC}_2\text{H}_5)_{2\text{-n}}\text{-C}_3\text{H}_6\text{-N}(\text{C}_4\text{H}_9)_2$
$(\text{-O})_{1+n}\text{Si}(\text{OH})_{2\text{-n}}\text{-C}_3\text{H}_6\text{-N}(\text{C}_4\text{H}_9)_2$
$(\text{-O})_{1+n}\text{Si}(\text{OCH}_3)_{2\text{-n}}\text{-C}_3\text{H}_6\text{-NH}(\text{C}_2\text{H}_4)\text{NH}_2$
$(\text{-O})_{1+n}\text{Si}(\text{OC}_2\text{H}_5)_{2\text{-n}}\text{-C}_3\text{H}_6\text{-NH}(\text{C}_2\text{H}_4)\text{NH}_2$
$(\text{-O})_{1+n}\text{Si}(\text{OH})_{2\text{-n}}\text{-C}_3\text{H}_6\text{-NH}(\text{C}_2\text{H}_4)\text{NH}_2$

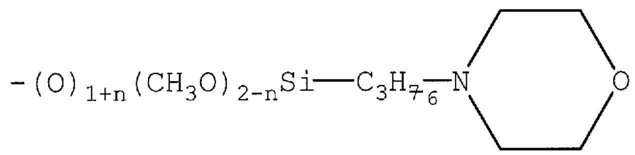

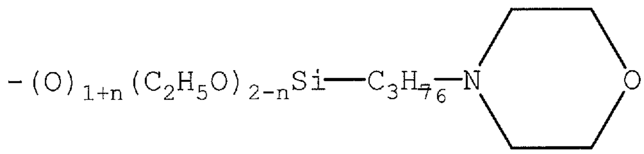

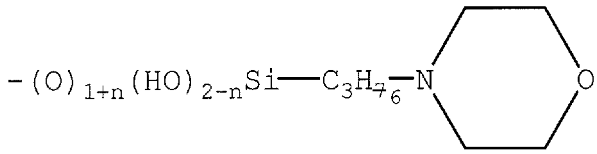

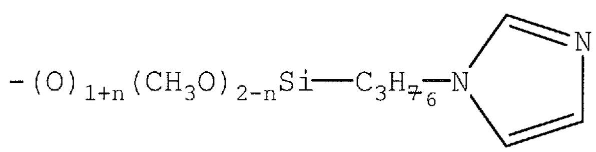

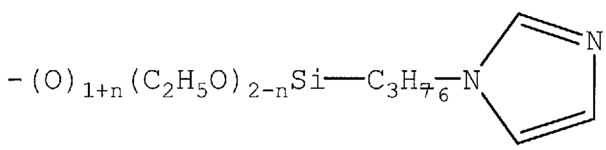

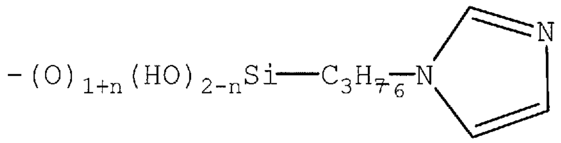

wobei n die oben genannte Bedeutung hat.

Die Metalloxide sind herstellbar in einem Verfahren, in dem die Modifizierung der Metalloxide, mit Organosilanen der allgemeinen Formel II

$$X_{1+n}Si(OR^1)_{2-n}\text{-}R^2\text{-}NR^3_2 \qquad (II)$$

wasserfrei erfolgt, wobei $R^1$, $R^2$, $R^3$, $R^4$ und n die oben genannte Bedeutung haben, $R^1$ und $R^4$ identisch sein können und X = Halogen, Stickstoffrest, $OR^4$, $OCOR^4$, $O(CH_2)_XOR^4$ und x = 1, 2, 3 bedeutet.

Die Modifizierung der Kieselsäure mit Gruppen der allgemeinen Formel I kann gemäß bekannter Verfahren erfolgen, wie z.B. beschrieben in EP 686 676 B1, mit Organosilanen der allgemeinen Formel II

$$X_{1+n}Si(OR^1)_{2-n}\text{-}R^2\text{-}NR^3_2 \qquad (II)$$

wobei $R^1$, $R^2$, $R^3$, $R^4$ und n die oben genannte Bedeutung haben, $R^1$ und $R^4$ identisch sein können und X = Halogen, Stickstoffrest, $OR^4$, $OCOR^4$, $O(CH_2)_XOR^4$ und x = 1, 2, 3 bedeutet.

Bevorzugt sind die erfindungsgemäßen pyrogenen Kieselsäuren zusätzlich zu Gruppen der allgemeinen Formel I mit weiteren Gruppen der allgemeinen Formel III

$$R^5_aSiR^6_bO_c\text{-} \qquad (III)$$

modifiziert, wobei

a 1, 2, 3,
b 0, 1, 2,
c 1, 2, 3, sein kann, wobei
a + b + c = 4 ist, wobei

**$R^5$** ein einwertiger, gegebenenfalls einfach oder mehrfach ungesättigter, gegebenenfalls verzweigter Kohlenwasserstoffrest mit 1 bis 24 C-Atomen,

**$R^6$** ein ebenfalls einwertiger, gegebenenfalls einfach oder mehrfach ungesättigter, gegebenenfalls verzweigter Kohlenwasserstoffrest mit 1 bis 20 C-Atomen sein kann.

Bevorzugt handelt es sich bei Resten $R^5$ um Alkylreste wie Methyl-, Ethyl-, Propyl-, Hexyl- wie n-Hexyl- oder i-Hexyl-, Octyl- wie n-Octyl- oder i-Octyl-, n-Dodecyl-, n-Hexadecyl-oder n-Octadecylreste.

Bevorzugt handelt es sich bei Resten $R^6$ um Alkylreste wie Methyl-, Ethyl- oder Propylreste.

Bevorzugte Gruppen der allgemeinen Formel III auf der Kieselsäureoberfläche sind Trimethylsilyloxy- $(CH_3)_3Si(O\text{-})$, Dimethylsilyldioxy- $(CH_3)_2Si(O\text{-})_2$, n-Propylsilyltrioxy- $C_3H_7Si(O\text{-})_3$, n-Octylsilyltrioxy-$C_8H_{17}Si(O\text{-})_3$, i-Octylsilyltrioxy- $C_8H_{17}Si(O\text{-})_3$, n-Octylmethylsilyldioxy-$C_8H_{17}SiCH_3(O\text{-})_2$, i-Octylmethylsilyldioxy-$C_8H_{17}SiCH_3(O\text{-})_2$, n-Hexadecylsilyltrioxy- $C_{16}H_{33}Si(O\text{-})_3$ n-Hexadecylmethylsilyldioxy- $C_{16}H_{33}SiCH_3(O\text{-})_2$, n-Dodecylsilyltrioxy- $C_{18}H_{37}Si(O\text{-})_3$.

Ganz besonders bevorzugt sind die Trimethylsilyloxygruppe $(CH_3)_3Si(O\text{-})_3$ und die Dimethylsilyldioxygruppe $(CH_3)_2Si(O\text{-})_2$.

Die Modifizierung der Metalloxide mit Gruppen der allgemeinen Formel III kann gemäß bekannter Verfahren erfolgen, wie z.B. beschrieben in EP 686 676 B1 mit Organosilanen der allgemeinen Formel IV

$$R^5_aSiR^6_bX_c \qquad (IV)$$

wobei $R^4$, $R^5$, $R^6$, a, b, c die oben genannte Bedeutung haben und X = Halogen, Stickstoffrest, $OR^4$, $OCOR^4$, $O(CH_2)_XOR^4$ und x = 1, 2, 3 bedeutet.

Bevorzugt ist Methyltrichlorsilan, Dimethyldichlorsilan, Trimethylchlorsilan, Methyltrimethoxysilan, Dimethyldimethoxysilan, Trimethylmethoxysilan oder Hexamethyldisilazan.

Zur Oberflächenmodifizierung mit Gruppen der allgemeinen Formel III können ferner Organosiloxane aufgebaut

aus Einheiten der Formel

$$(R^5_3SiO_{1/2}),$$

und/oder

$$(R^5_2SiO_{2/2}),$$

und/oder

$$(R^5SiO_{3/2})$$

eingesetzt werden, wobei die Anzahl von diesen Einheiten in einem Organosiloxan vorzugsweise mindestens 2 ist, und $R^5$ die oben genannte Bedeutung hat. Gegebenenfalls kann die Oberflächenmodifizierung ausschließlich durch Organosiloxane erfolgen oder in beliebigen Gemischen mit Silanen der allgemeinen Formel IV.

Beispiele für Organosiloxane sind lineare oder cyclische Dialkylsiloxane mit einer mittleren Anzahl an Dialkylsiloxyeinheiten von größer als 3. Die Dialkylsiloxane sind bevorzugt Dimethylsiloxane. Besonders bevorzugt sind lineare Polydimethylsiloxane mit folgenden Endgruppen: Trimethylsiloxy-, Dimethylhydroxysiloxy-, Dimethylchlorsiloxy-, Methyldichlorsiloxy-, Dimethylmethoxysiloxy-, Methyldimethoxysiloxy-, Dimethylethoxysiloxy-, Methyldiethoxysiloxy-, Dimethylacetoxysiloxy-, Methyldiacetoxysiloxy- und Dimethylhydroxysiloxygruppen, insbesondere mit Trimethylsiloxy- oder Dimethylhydroxysiloxyendgruppen.

Bevorzugt haben die genannten Polydimethylsiloxane eine Viskosität bei 25°C von 2 bis 100 mPa˙s.

Weitere Beispiele für Organosiloxane sind Siliconharze, im besonderen solche, die als Alkylgruppen Methylgruppen enthalten, wobei es sich besonders bevorzugt um solche handelt, die $R^5_3SiO_{1/2}$ und $SiO_{4/2}$-Einheiten enthalten oder solche, die $R^5SiO_{3/2}$ und gegebenenfalls $R^5_2SiO_{2/2}$-Einheiten enthalten, wobei $R^5$ eine der oben genannten Bedeutungen hat.

Bevorzugt haben die genannten Siliconharze eine Viskosität bei 25°C von 500 bis 5000 $mm^2/s$.

Bei Siliconharzen mit einer Viskosität von größer als 1000 $mm^2/s$ bei 25°C sind solche bevorzugt, die sich in einem technisch gut handhabbaren Lösungsmittel, wie vorzugsweise Alkohole wie Methanol, Ethanol, iso-Propanol, Ether wie Diethylether, Tetrahydrofuran, Siloxane wie Hexamethyldisiloxan, Alkane wie Cyclohexan oder n-Octan, Aromaten wie Toluol oder Xylol, mit einer Konzentration über 10 Gew.-% und einer Mischungsviskosität kleiner als 1000 $mm^2/s$ bei einer Temperatur von 25°C und dem Druck der umgebenden Atmosphäre lösen lassen.

Unter den festen Organosiloxanen sind solche bevorzugt, die sich in einem technisch handhabbaren Lösungsmittel (wie oben definiert) mit einer Konzentration größer als 10 Gew.% und einer Mischungsviskosität kleiner als 1000 $mm^2/s$ bei einer Temperatur von 25°C lösen.

Vorzugsweise werden die erfindungsgemäßen pyrogenen Kieselsäuren (a) parallel mit Silanen der allgemeinen Formel IV bzw. Organopolysiloxanen und Silanen der allgemeinen Formel II modifiziert oder (b) erst mit Silanen der allgemeinen Formel IV bzw. Organopolysiloxanen und anschließend mit Silanen der allgemeinen Formel II modifiziert oder (c) erst mit Silanen der allgemeinen Formel II und anschließend mit Silanen der allgemeinen Formel IV bzw. Organopolysiloxanen modifiziert, bevorzugt werden die erfindungsgemäßen pyrogenen Kieselsäuren erst mit Silanen der allgemeinen Formel IV bzw. Organopolysiloxanen und anschließend mit Silanen der allgemeinen Formel II modifiziert, wobei die pyrogenen Kieselsäuren nach der Modifizierung mit Silanen der allgemeinen Formel IV bzw. Organopolysiloxanen isoliert werden können und dann mit Silanen der allgemeinen Formel II modifiziert werden können, oder ohne vorherige Isolierung mit Silanen der allgemeinen Formel II modifiziert werden können, bevorzugt ist die vorherige Isolierung.

Die mit Gruppen der allgemeinen Formel III vormodifizierten pyrogenen Kieselsäuren weisen vorzugsweise einen Modifizierungsgrad der Oberflächen-Metall-OH-Gruppen, also beispielsweise der Silanolgruppen Si-OH, von 5 bis 90%, bevorzugt von 10 bis 80% und besonders bevorzugt von 20 bis 75% auf, wobei der Modifizierungsgrad f(MOH) definiert ist als $f(MOH) = (n_{ges}(MOH) - n(MOH)) * 100\% / n_{ges}(MOH)$, wobei n (MOH) die Stoffmenge der

Oberflächen-Metall-OH-Gruppen pro $nm^2$ nach der Modifizierung und $n_{ges}(MOH)$ die Stoffmenge der Oberflächen-Metall-OH-Gruppen pro $nm^2$ vor der Modifizierung ist, wobei sich die Stoffmengen jeweils auf die spezifische Oberfläche (gemessen nach der BET Methode nach DIN EN ISO 9277/DIN 66132) der hydrophilen Ausgangskieselsäure beziehen und für pyrogene Kieselsäuren $n_{ges}(MOH)$, d.h. $n_{ges}(SiOH)$, üblicherweise den Wert 1,8 $(nm^2)^{-1}$ aufweist. Die Stoffmenge der Silanolgruppen läßt sich beispielsweise bestimmen mittels Säure-Basen-Titration gemäß G. W. Sears, Anal. Chem. 1956, 28, 1981.

Die mit Gruppen der allgemeinen Formel III vormodifizierten Kieselsäuren weisen vorzugsweise einen Kohlenstoffgehalt 0,1 bis 10%, bevorzugt 0,25 bis 5% auf. Der eingesetzte Feststoff kann eine pyrogenen Kieselsäuren sein, die an der Oberfläche OH-Gruppen aufweist.

Als Basis-(Ausgangs-)-Produkt der Oberflächenmodifizierung wird bevorzugt ein Feststoff mit einer mittleren Partikelgröße keiner 1000 μm, insbesondere mit einer mittleren Primärteilchen-Partikelgröße von 5 bis 100 nm eingesetzt. Dabei können diese Primärteilchen nicht isoliert existieren, sondern Bestandteile größerer Aggregate und Agglomerate sein.

Der Feststoffe ist pyrogene Kieselsäure. Vorzugsweise weist die pyrogene Kieselsäure eine spezifische Oberfläche von 0,1 bis 1000 $m^2/g$ (gemessen nach der BET Methode nach DIN EN ISO 9277/DIN 66132) auf, besonders bevorzugt von 10 bis 500 $m^2/g$.

Die Kieselsäure kann Aggregate (Definition nach DIN 53206) im Bereich von Durchmessern 50 bis 1000 nm aufweisen, bevorzugt 50 bis 500 nm und besonders bevorzugt 75 bis 350 nm, wobei die Kieselsäure aus Aggregaten aufgebaute Agglomerate (Definition nach DIN 53206) aufweist, die in Abhängigkeit von der äußeren Scherbelastung (z.B. bedingt durch die Meßbedingungen) Größen von 1 bis 1000 μm aufweisen können. Der Durchmesser der Aggregate wird dabei bestimmt als hydrodynamischer Äquivalentdurchmesser mittel Photonenkorrelationsspektroskopie.

Das Metalloxid ist aus Gründen der technischen Handhabbarkeit Siliciumdioxid, ein Oxid mit kovalentem Bindungs-Anteil in der Metall-Sauerstoff-Bindung

Das Metalloxid ist pyrogene Kieselsäure, die in einer Flammenreaktion aus Organosiliciumverbindungen hergestellt wird, z.B. aus Siliciumtetrachlorid oder Methyltrichlorsilan, oder Hydrogentrichlorsilan oder Hydrogenmethyldichlorsilan, oder anderen Methylchlorsilanen oder Alkylchlorsilanen, auch im Gemisch mit Kohlenwasserstoffen, oder beliebigen verflüchtigbaren oder versprühbaren Gemischen aus Organosiliciumverbindungen, wie genannt, und Kohlenwasserstoffen, z.B. in einer Wasserstoff-Sauerstoff-Flamme, oder auch einer Kohlenmonoxid-Sauerstoff-Flamme, hergestellt wird. Die Herstellung der Kieselsäure kann dabei wahlweise mit und ohne zusätzlichem Zusatz von Wasser erfolgen, zum Beispiel im Schritt der Reinigung; bevorzugt ist kein Zusatz von Wasser.

Es können beliebige Gemische der genannten Feststoffe zur Oberflächenmodifizierung eingesetzt werden.

Vorzugsweise weist die pyrogene Kieselsäure eine fraktale Dimension der Oberfläche von vorzugsweise kleiner oder gleich 2,3 auf, besonders bevorzugt von kleiner oder gleich 2,1, im besonderen bevorzugt von 1,95 bis 2,05, wobei die fraktale Dimension der Oberfläche $D_S$ hierbei definiert ist als: Partikel-Oberfläche A ist proportional zum Partikel-Radius R hoch $D_S$

Vorzugsweise weist die Kieselsäure eine fraktale Dimension der Masse $D_m$ von vorzugsweise kleiner oder gleich 2,8, bevorzugt kleiner oder gleich 2,3, besonders bevorzugt von 1,7 bis 2,1 auf, wie z.B. gegeben in F. Saint-Michel, F. Pignon, A. Magnin, J. Colloid Interface Sci. 2003, 267, 314.. Die fraktale Dimension der Masse $D_m$ ist hierbei definiert als:

Partikel-Masse M ist proportional zum Partikel-Radius R hoch $D_m$.

Vorzugsweise weist die unmodifizierte Kieselsäure eine Dichte an Oberflächen-Silanolgruppen SiOH von kleiner als 2,5 SiOH / $nm^2$, vorzugsweise kleiner 2,1 SiOH / $nm^2$, bevorzugt von kleiner als 2 SiOH / $nm^2$, besonders bevorzugt von 1,7 bis 1,9 SiOH / $nm^2$ auf.

Es können vorzugsweise auch hydrophile Kieselsäuren eingesetzt werden, die frisch hergestellt direkt aus dem Brenner kommen, zwischengelagert oder bereits handelsüblich verpackt sind.

Es können vorzugsweise unverdichtete, mit Schüttdichten unter 60 g/l, aber auch verdichtete, mit Schüttdichten über 60 g/l, Kieselsäuren eingesetzt werden.

Es können vorzugsweise Gemische aus verschiedenen Kieselsäuren eingesetzt werden, so z.B. Mischungen aus Kieselsäuren unterschiedlicher BET-Oberfläche, oder Mischungen aus Kieselsäuren mit unterschiedlichem Hydrophobier- oder Silyliergrad.

Das pyrogene Kieselsäure kann vorzugsweise in kontinuierlichen oder diskontinuierlichen Verfahren hergestellt werden, das Verfahren zur Silylierung kann aus einem oder mehreren Schritten aufgebaut sein. Bevorzugt wird die silylierte Kieselsäure mittels eines Verfahren hergestellt, bei dem der Herstellungsprozeß in getrennten Schritten erfolgt: (A) zunächst Herstellung der hydrophilen Kieselsäure (B) gegebenenfalls prämodifizieren der Kieselsäure mittels bekannter Methoden mit Silanen der allgemeinen Formel IV bzw. Organopolysiloxanen, sodann (C) die Silylierung/Modifizierung der Kieselsäure mit (1) Beladung der hydrophilen oder prämodifizierten Kieselsäure mit Silanen der allgemeinen Formel II, (2) Reaktion der Kieselsäure mit den aufgebrachten Verbindungen und (3) Reinigung der Kieselsäure von überschüssigen aufgebrachten Verbindungen.

Die Oberflächenbehandlung wird bevorzugt in einer Atmosphäre durchgeführt, die nicht zur Oxidation der silylierten Kieselsäure führt, d.h. bevorzugt weniger als 10 Vol.% Sauerstoff, besonders bevorzugt weniger als 2,5 Vol.%, ganz besonders bevorzugt bei weniger als 1 Vol.% Sauerstoff.

Belegung, Reaktion und Reinigung können vorzugsweise als diskontinuierlicher oder kontinuierlicher Prozess durchgeführt werden.

Aus technischen Gründen bevorzugt ist eine kontinuierliche Reaktionsführung.

Die Belegung (Schritt C1) erfolgt bei Temperaturen von 20 bis 80 °C; ganz besonders bevorzugt erfolgt der

Belegungsschritt bei 30 bis 50 °C.

Die Verweilzeit beträgt vorzugsweise 1 Min - 24 h, bevorzugt 15 Min bis 300 Min, aus Gründen der Raumzeitausbeute besonders bevorzugt 15 Min bis 240 Min.

Der Druck in der Belegung reicht vorzugsweise von schwachem Unterdruck bis 0,2 bar bis zum Überdruck von 100 bar, wobei aus technischen Gründen Normaldruck, das heißt druckfreies Arbeiten gegenüber Außen-/Atmosphären-Druck bevorzugt ist.

Die Silane der allgemeinen Formel II und gegebenenfalls der Formel IV bzw. Organopolysiloxane werden bevorzugt in flüssiger Form zugefügt, und insbesondere der pulverförmigen Kieselsäure zugemischt. Die Verbindungen können dabei in reiner Form oder als Lösungen in bekannten technisch eingesetzten Lösungsmitteln wie z.B. Alkoholen wie z.B. Methanol, Ethanol, oder i-Propanol, Ethern wie z.B. Diethylether, THF, oder Dioxan, oder Kohlenwasserstoffen wie z.B. Hexanen oder Toluol zugemischt werden. Die Konzentration in der Lösung beträgt dabei 5 - 95 Gew.%, bevorzugt 30 - 95 Gew.%, besonders bevorzugt 50 - 95 Gew.%.

Das Zumischen geschieht vorzugsweise durch Düsentechniken, oder vergleichbare Techniken, wie effektive Verdüsungstechniken, wie Verdüsen in 1-Stoffdüsen unter Druck (vorzugsweise 5 bis 20 bar), Versprühen in 2-Stoffdüsen unter Druck (vorzugsweise Gas und Flüssigkeit 2-20 bar), feinstverteilen mit Atomizern oder Gas-Feststoff-Austauschaggregaten mit beweglichen, rotierenden oder statischen Einbauten, die eine homogene Verteilung der Silane der allgemeinen Formel II mit der pulverförmigen Kieselsäure erlauben.

Das Aerosol kann vorzugsweise von oben auf den fluidisierten Feststoff aufgedüst werden oder in den fluidisierten Feststoff hinein, bevorzugt ist Verdüsung von oben auf das Produkt.

Bevorzugt werden die Silane der allgemeinen Formel II als feinstverteiltes Aerosol zugefügt, dadurch gekennzeichnet, daß das Aerosol eine Sinkgeschwindigkeit von 0,1 - 20 cm/s aufweist.

Bevorzugt erfolgt die Beladung der Kieselsäure und die Reaktion mit den Silanen der allgemeinen Formel II unter mechanischer oder gasgetragener Fluidisierung. Besonders bevorzugt ist die mechanische Fluidisierung.

Eine Gas-getragene Fluidisierung kann vorzugsweise durch alle inerten Gase erfolgen, die nicht mit den Silanen der allgemeinen Formel II , der Kieselsäure, und der modifizierten Kieselsäure reagieren, also nicht zu Nebenreaktionen, Abbaureaktionen, Oxidationsvorgängen und Flammen- und Explosionserscheinungen führen, wie vorzugsweise $N_2$, Ar, andere Edelgase, $CO_2$, etc. Die Zuführung der Gase zur Fluidisierung erfolgt bevorzugt im Bereich von Leerrohrgasgeschwindigkeiten von 0,05 bis 5 cm/s, besonders bevorzugt von 0,5-2,5 cm/s. Besonders bevorzugt ist die mechanische Fluidisierung, die ohne zusätzlichen über die Inertisierung hinausgehenden Gaseinsatz, durch Flügelrührer, Ankerrührer, und sonstige geeignete Rührorgane erfolgt.

In einer besonders bevorzugten Ausführung werden nicht abreagierte Silane der allgemeinen Formel II und gegebenenfalls der Formel IV bzw. Organopolysiloxane und Abgase aus dem Reinigungsschritt wieder in den Schritt der Belegung und Beladung der Kieselsäure zurückgeführt; dies kann teilweise oder vollständig geschehen, bevorzugt zu 10 - 90 % des gesamten Volumenstromes der aus der Abreinigung austretenden Gasvolumina.

Dies geschieht in geeignet temperierten Vorrichtungen. Diese Rückführung erfolgt bevorzugt in nicht-kondensierter Phase, also als Gas oder als Dampf. Diese Rückführung kann als Stofftransport entlang eines Druckausgleichs erfolgen oder als gesteuerter Stofftransport mit den technisch üblichen Systemen des Gastransports, wie Ventilatoren, Pumpen, Druckluftmembranpumpen. Da die Rückführung der nichtkondensierten Phase bevorzugt ist, empfiehlt sich gegebenenfalls die Beheizung der rückführenden Leitungen.

Die Rückführung der nicht abreagierten Silane der allgemeinen Formel II und gegebenenfalls der Formel IV bzw. Organopolysiloxane und der Abgase kann dabei zwischen vorzugsweise 5 und 100 Gew.%, bezogen auf deren Gesamtmasse, bevorzugt zwischen 30 und 80 Gew.% liegen. Die Rückführung kann dabei, bezogen auf 100 Teile frisch eingesetztes Silan zwischen 1 und 200 Teile, bevorzugt 10 bis 30 Teile betragen.

Die Rückführung der Abreinigungsprodukte der Modifizierungsreaktion in die Belegung erfolgt bevorzugt kontinuierlich.

Die Reaktion (Schritt C2) erfolgt bei Temperaturen -von 40 - 180 °C.

Die Reaktion erfolgt in einem Temperaturgradienten d.h., daß die Reaktionstemperatur im Laufe der Reaktionszeit ansteigt.

Dies bedeutet, daß zu Beginn der Reaktion die Wandtemperatur des Reaktionsbehälters vorzugsweise in einem Bereich von 20-100 °C, bevorzugt in einem Bereich von 40 - 80 °C liegt und gegen Ende der Reaktion die Wandtemperatur des Reaktionsbehälters in einem Bereich von vorzugsweise 80 - 180 °C, bevorzugt in einem Bereich von 100 - 150 °C liegt, mit der Maßgabe, daß die Wandtemperatur des Reaktionsbehälters zu Beginn der Reaktion niedriger als gegen Ende der Reaktion ist. Vorzugsweise liegt also die Wandtemperatur des Reaktionsbehälters zu Beginn der Reaktion in einem Bereich von vorzugsweise 20 - 100 °C und gegen Ende der Reaktion in einem Bereich von 80 - 180 °C, mit der Maßgabe, daß die Wandtemperatur des Reaktionsbehälters zu Beginn der Reaktion niedriger als gegen Ende der Reaktion ist, bevorzugt liegt die Wandtemperatur des Reaktionsbehälters zu Beginn der Reaktion in einem Bereich von 40 - 80 °C und gegen Ende der Reaktion in einem Bereich von 80 - 150 °C.

Dies bedeutet ferner, daß die Produkttemperatur zu Beginn der Reaktion in einem Bereich von 40 - 100 °C,

bevorzugt in einem Bereich von 40 - 80 °C liegt und gegen Ende der Reaktion die Produkttemperatur in einem Bereich von 80-180 °C, bevorzugt in einem Bereich von 100 - 150 °C liegt, mit der Maßgabe, daß die Produkttemperatur zu Beginn der Reaktion niedriger als gegen Ende der Reaktion ist. Die Produkttemperatur liegt also zu Beginn der Reaktion in einem

Bereich von 40 - 100 °C und gegen Ende der Reaktion in einem Bereich von 80 - 180 °C, mit der Maßgabe, daß die Produkttemperatur zu Beginn der Reaktion niedriger als gegen Ende der Reaktion ist, bevorzugt liegt die Produkttemperatur zu Beginn der Reaktion in einem Bereich von 40 - 80 °C und gegen Ende der Reaktion in einem Bereich von 80 - 150 °C.

Dies bedeutet, daß je nach Prozessdurchführung, d.h. kontinuierlicher oder diskontinuierlicher Prozessdurchführung, der Temperaturgradient abhängig vom Ort dT/dx (kontinuierlich) oder abhängig von der Zeit dT/dt (diskontinuierlich) sein kann, bevorzugt ist die kontinuierliche Prozessführung.

Die Reaktionstemperatur, d.h. die Wand- bzw. Produkttemperatur und deren Gradient kann dabei gemäß folgender Verfahren erreicht werden.

1. Kontinuierlicher Prozessverlauf (d.h. dT/dx):

- Das Metalloxid wird vorzugsweise mittels Gas-getragener oder mechanischer Fluidisierung/Förderung durch eine Heizzone mit ansteigender Wandtemperatur gefördert. Die Wandtemperatur steigt in Stufen an. Die Reaktionszone besteht aus vorzugsweise bis zu 10 separaten Heizzonen unterschiedlicher Temperatur, bevorzugt 5 separaten Heizzonen unterschiedlicher Temperatur, besonders bevorzugt 3 separaten Heizzonen unterschiedlicher Temperatur , in einer speziellen Ausführung aus 2 separaten Heizzonen unterschiedlicher Temperatur, d.h. von Heizzone zu Heizzone ansteigender Temperatur. Gegebenenfalls können die einzelnen Heizzonen durch Klappen von einander getrennt sein. Der Reaktionsbehälter kann senkrecht oder waagerecht stehen. Bevorzugt ist die senkrechte Ausführung. Bei senkrechter Ausführung kann das Metalloxid von unten nach oben oder von oben nach unten die Reaktionszone durchlaufen. Bevorzugt ist von oben nach unten.

Oder:

- Das Metalloxid wird vorzugsweise mittels Gas-getragener oder mechanischer Fluidisierung/Förderung durch separate Reaktionsbehälter mit unterschiedlicher, d.h. ansteigender Wandtemperatur gefördert. Die Reaktionskaskade kann dabei aus vorzugsweise bis zu 10 Reaktionsbehältern unterschiedlicher Wandtemperatur, bevorzugt bis zu 5 Reaktionsbehältern unterschiedlicher Wandtemperatur, besonders bevorzugt bis zu 3 Reaktionsbehältern unterschiedlicher Wandtemperatur, und in einer speziellen Ausführung aus 2 Reaktionsbehältern unterschiedlicher Wandtemperatur bestehen, mit der Maßgabe daß die Wandtemperatur von Reaktionsbehälter zu Reaktionsbehälter ansteigt. Die Reaktionsbehälter können senkrecht oder waagerecht stehen. Bevorzugt ist die senkrechte Ausführung. Bei senkrechter Ausführung kann das Metalloxid von unten nach oben oder von oben nach unten die Reaktionszone durchlaufen. Bevorzugt ist von oben nach unten.

Oder:

- Das Metalloxid wird vorzugsweise mittels mechanischer Fluidisierung/Förderung durch einen senkrecht stehenden Reaktionsbehälter gefördert. Der Reaktionsbehälter wird im unteren Teil auf die maximale Reaktionstemperatur beheizt. Im Reaktionsbehälter stellt sich dann ein Temperaturgefälle zwischen dem oberen Teil des Reaktionsbehälters (niedrigste Temperatur) und dem unteren Teil des Reaktionsbehälters (höchste Temperatur) ein. Der Temperaturgradient der Produkttemperatur kann beispielsweise durch geeignete Rührtechnik mit Pfropfenströmung gesteuert werden. Vorzugsweise kann dies durch eine Kombination verschiedener Rührerelemente erzielt werden, die in Segmenten angeordnet sein können. So können beispielsweise Segmente mit horizontaler Durchmischung gefolgt von Segmenten mit vertikaler Mischcharkteristik eingesetzt werden.

2. Diskontinuierlicher Produktionsverlauf (Batchbetrieb)

- Das Metalloxid wird vorzugsweise mittels Inertgas oder mechanisches Rühren im Reaktionsbehälter fluidisiert. Im Laufe der Reaktionsdauer wird die Reaktionstemperatur im Reaktionsbehälter sukzessive, d.h. stufenweise erhöht.

Die Verweilzeit pro Reaktionstemperatur liegt zwischen 5 min und 240 min, bevorzugt zwischen 10 min und 180 min und besonders bevorzugt zwischen 15 min und 120 min.

Die Beheizung der Reaktionszone kann z.B. über die Behälterwand z.B. mittels elektrischer Beheizung oder mittels Temperierflüssigkeit oder Dampf erfolgen. Gegebenenfalls können im Reaktionsgefäß z.B. Heizschlangen eingesetzt werden. Gegebenenfalls kann die Beheizung von außen über Infrarotstrahler erfolgen.

Die Temperaturmessung von Wand- und Produkttemperatur kann vorzugsweise mittels üblicherweise eingesetzten Messinstrumenten wie Thermoelementen, Widerstandsthermometern, Bimetallthermometern, IR-Sensoren oder anderen erfolgen.

Die Gesamtreaktionszeit beträgt vorzugsweise 10 Min bis 48 h, bevorzugt 15 Min bis 5 h, besonders bevorzugt 20 min bis 4 h.

Gegebenenfalls können protische organische Lösungsmittel hinzugefügt werden, wie flüssige oder verdampfbare Alkohole; typische Alkohole sind iso-Propanol, Ethanol und Methanol. Es können auch Gemische der oben genannten protischen organischen Lösungsmittel zugefügt werden. Vorzugsweise werden 1 bis 50 Gew.% an protischen Lösungsmitteln bezogen auf die Kieselsäure zugefügt, besonders bevorzugt 5 bis 25%.

Die Modifizierung der Metalloxide wird in wasserfreier Umgebung durchgeführt. Das heißt, daß der Gehalt an physikalisch adsorbiertem Wasser der eingesetzten hydrophilen Metalloxide bzw. mit Gruppen der allgemeinen Formel III modifizierten Metalloxide kleiner als 5 Gew.%, bevorzugt kleiner 1,5 Gew.% und besonders bevorzugt kleiner 0,5 Gew.% ist.

Zur Reaktion der Metalloxiden mit Silanen der allgemeinen Formel II wird kein Wasser zugesetzt.

Vorzugsweise werden die eingesetzten Prozessgase vor der Einspeisung getrocknet.

Gegebenenfalls können die zur Modifizierung mit Silanen der allgemeinen Formel II eingesetzten Metalloxide vor der Reaktion getrocknet werden.

Gegebenenfalls können basische Katalysatoren, von basischem Charakter im Sinne einer Lewis Base oder einer Brönsted Base, wie Ammoniak oder Amine wie Triethylamin, zugesetzt werden. Bevorzugt werden diese in Spuren zugesetzt, d.h. kleiner als 1000 ppm. Besonders bevorzugt werden keine Katalysatoren zugesetzt.

Die Abreinigung (Schritt C3) erfolgt bei einer Reinigungstemperatur von 20 bis 200 °C, bevorzugt 50°C bis 180°C, besonders bevorzugt von 50 bis 150 °C.

Der Reinigungsschritt ist vorzugsweise durch Bewegung gekennzeichnet, wobei langsame Bewegung und geringes Durchmischen besonders bevorzugt ist. Die Rührorgane werden dabei vorteilhafterweise so eingestellt und bewegt, daß bevorzugt ein Mischen und ein Fluidisieren, jedoch nicht völlige Verwirbelung, eintritt.

Der Reinigungsschritt kann weiterhin vorzugsweise durch erhöhten Gaseintrag gekennzeichnet sein, entsprechend einer Leerrohrgasgeschwindigkeit von vorzugsweise 0,001 bis 10 cm/s, bevorzugt 0,01 bis 1 cm/s. Dies kann durch alle inerten Gase erfolgen, die nicht mit den Silanen der allgemeinen Formel II, der Kieselsäure, und der modifizierten Kieselsäure reagieren, also nicht zu Nebenreaktionen, Abbaureaktionen, Oxidationsvorgängen und Flammen- und Explosionserscheinungen führen, wie vorzugsweise $N_2$, Ar, andere Edelgase, $CO_2$, etc.

Vorzugsweise werden während der Modifizierung oder im Anschluß an die Reinigung Verfahren zur mechanischen Verdichtung der Kieselsäure eingesetzt werden, wie zum Beispiel Presswalzen, Mahlaggregate, wie Kollergänge und wie Kugelmühlen, kontinuierlich oder diskontinuierlich, Verdichtung durch Schnecken oder Schraubenmischer, Schraubenverdichter, Brikettierer, oder Verdichten durch Absaugen des Luft- oder Gasinhaltes durch geeignete Vakuummethoden.

Besonders bevorzugt ist die mechanische Verdichtung während der Modifizierung, im Schritt C durch Preßwalzen, oben genannte Mahlaggregate wie Kugelmühlen oder Verdichtung durch Schnecken, Schraubenmischer, Schraubenverdichter, Brikettierer gekennzeichnet.

In einer weiteren besonders bevorzugten Verfahrensweise werden im Anschluss an die Reinigung Verfahren zur mechanischen Verdichtung der Kieselsäure eingesetzt, wie Verdichten durch Absaugen des Luft- oder Gasinhaltes durch geeignete Vakuummethoden oder Preßwalzen oder Kombination von beiden Verfahren.

Zusätzlich können in einer besonders bevorzugten Verfahrensweise im Anschluss an die Reinigung Verfahren zur Desagglomerierung der Kieselsäure eingesetzt werden, wie Stiftmühlen, Hammermühlen, Gegenstrommühlen, Prallmühlen oder Vorrichtungen zur Mahlsichtung.

In einem weiteren bevorzugten Verfahren werden Dispersionen des hydrophilen Metalloxids in typischen industriell eingesetzten organischen Lösungsmitteln wie vorzugsweise Alkoholen wie Methanol, Ethanol, i-Propanol, wie Ketonen wie Aceton, Methyl-Ethyl-Keton, wie Ethern wie Diethylether, THF, Kohlenwasserstoffen wie Pentan, Hexanen, Aromaten wie Toluol oder anderen flüchtigen Lösungsmitteln wie Hexamethyldisiloxan oder deren Mischungen mit den Silanen der allgemeinen Formel II umgesetzt.

Das Verfahren kann kontinuierlich oder diskontinuierlich durchgeführt werden und aus einem oder mehreren

Schritten aufgebaut sein. Bevorzugt ist ein kontinuierliches Verfahren. Bevorzugt wird das modifizierte Metalloxid mittels eines Verfahren hergestellt, bei dem das Metalloxid (1) in einem der oben genannten Lösungsmittel eingemischt wird, (2) mit den Silanen zur Reaktion gebracht wird, und (3) von Lösungsmitteln, überschüssigen Silanen und Nebenprodukten befreit wird.

Die Dispergierung (1), Reaktion (2), Trocknung (3) und gegebenenfalls Nachreaktion (4) werden bevorzugt durchgeführt in einer Atmosphäre mit weniger als 10 Vol.-% Sauerstoff, besonders bevorzugt weniger als 2,5 Vol.-%, beste Ergebnisse werden erzielt bei weniger als 1 Vol.-% Sauerstoff.

Das Einmischen (1) kann vorzugsweise mittels üblicher Mischaggregate wie Ankerrührer oder Balkenrührer erfolgen. Gegebenenfalls kann das Einmischen unter hoher Scherung mittels Dissolvern, Rotor-Stator-Aggregaten, gegebenenfalls unter direkter Zudosierung in den Scherspalt, mittels Ultraschallgebern oder mittels Mahlaggregaten wie Kugelmühlen erfolgen. Gegebenenfalls können verschiedene der oben genannten Aggregate parallel oder nacheinander eingesetzt werden.

Zur Reaktion (2) der Silane mit der allgemeinen Formel II mit dem Metalloxid werden vorzugsweise die Silane in reiner Form oder als Lösung in geeigneten Lösungsmitteln der Metalloxiddispersion zugegeben und homogen vermischt. Die Zugabe der Silane kann dabei vorzugsweise in dem Behälter, der zur Herstellung der Dispersion eingesetzt wird oder in einem separaten Reaktionsbehälter erfolgen. Werden die Silane im Dispergierbehälter zugefügt, kann dies parallel zur oder nach Abschluß der Dispergierung erfolgen. Gegebenenfalls können die Silane gelöst im Dispergiermedium direkt im Dispergierschritt zugefügt werden.

Gegebenenfalls werden der Reaktionsmischung saure Katalysatoren wie Brönsted-Säuren wie flüssige oder gasförmige HCl, Schwefelsäure, Phosphorsäure oder Essigsäure, oder basische Katalysatoren wie Brönsted-Basen wie flüssiger oder gasförmiger Ammoniak, Amine wie $NEt_3$ oder NaOH zugefügt.

Der Reaktionsschritt wird vorzugsweise bei einer Temperatur von 0 °C bis 200 °C, bevorzugt bei 10 °C bis 180 °C und besonders bevorzugt von 20 °C bis 150 °C durchgeführt.

Das Entfernen von Lösungsmitteln, überschüssigen Silanen und Nebenprodukten (3) kann vorzugsweise mittels Trocknern oder durch Sprühtrocknen erfolgen.

Gegebenenfalls kann an den Trocknungsschritt noch ein Nachreaktionsschritt (4) zur Vervollständigung der Reaktion angeschlossen sein.

Die Nachreaktion erfolgt vorzugsweise bei Temperaturen von 20 - 300 °C, bevorzugt 20 - 200 °C und besonders bevorzugt bei 40 - 180 °C.

Bevorzugt erfolgte die Nachreaktion in einem Temperaturgradienten d.h., daß die Reaktionstemperatur im Laufe der Reaktionszeit ansteigt, wie bereits oben für den Fall der Modifizierung des Metalloxids als Feststoff beschrieben.

Die Gesamtnachreaktionsreaktionszeit beträgt vorzugsweise 10 Min bis 48 h, bevorzugt 15 Min bis 5 h, besonders bevorzugt 20 min bis 4 h.

Zusätzlich können vorzugsweise im Anschluss an die Trocknung bzw. Nachreaktion Verfahren zur mechanischen Verdichtung des Metalloxids eingesetzt werden, wie zum Beispiel Presswalzen, Mahlaggregate, wie Kollergänge und wie Kugelmühlen, kontinuierlich oder diskontinuierlich, Verdichtung durch Schnecken oder Schraubenmischer, Schraubenverdichter, Brikettierer, oder Verdichten durch Absaugen des Luft- oder Gasinhaltes durch geeignete Vakuummethoden.

In einer weiteren besonders bevorzugten Verfahrensweise werden im Anschluss an die Trocknung bzw. Nachreaktion Verfahren zur mechanischen Verdichtung des Metalloxids eingesetzt, wie Verdichten durch Absaugen des Luft- oder Gasinhaltes durch geeignete Vakuummethoden oder Presswalzen oder Kombination von beiden Verfahren.

Zusätzlich können in einer besonders bevorzugten Verfahrensweise im Anschluss an die Trocknung bzw. Nachreaktion Verfahren zur Desagglomerierung des Metalloxids eingesetzt werden, wie Stiftmühlen, Hammermühlen, Gegenstrommühlen, Prallmühlen oder Vorrichtungen zur Mahlsichtung.

Die Silane der allgemeinen Formel II werden in einer Menge von 1 Gew.% bis 20 Gew.% (bezogen auf das Metalloxid), bevorzugt in einer Menge von 2,0 Gew.% bis 15 Gew.% (bezogen auf das Metalloxid), besonders bevorzugt in einer Menge von 2,5 Gew.% bis 10 Gew.% (bezogen auf das Metalloxid), pro einer eingesetzten hydrophilen Metalloxid-Oberfläche von 100 $m^2/g$ BET-Oberfläche eingesetzt (gemessen nach der BET Methode nach DIN EN ISO 9277/DIN 66132).

Vorzugsweise wird eine Kieselsäure hergestellt mit homogen modifizierter Oberfläche, mit einer mittleren Primärteilchen-Partikelgröße kleiner als 100 nm, bevorzugt mit einer mittleren Primärteilchen-Partikelgröße von 5 bis 50 nm, wobei diese Primärteilchen nicht isoliert in der Kieselsäure existieren, sondern Bestandteile größerer Aggregate (Definition nach DIN 53206) sind, die einen Durchmesser von 50 bis 1000 nm aufweisen, bevorzugt 50 bis 500 nm und besonders bevorzugt 75 bis 350 nm und Agglomerate (Definition nach DIN 53206) aufbauen, die in Abhängigkeit von der äußeren Scherbelastung Größen von 1 bis 1000 $\mu m$ aufweisen, wobei die Kieselsäure eine spezifische Oberfläche von 10 bis 400 $m^2/g$ (gemessen nach der BET Methode nach DIN 66131 und 66132) aufweist, wobei die Kieselsäure eine fraktale Dimension der Masse $D_m$ von kleiner oder gleich 2,8, bevorzugt kleiner oder gleich 2,3, besonders bevorzugt von 1,7 bis 2,1 aufweist, wie z.B. gegeben in F. Saint-Michel, F. Pignon, A. Magnin, J. Colloid Interface Sci. 2003, 267, 314.

Vorzugsweise ist die Kieselsäureoberfläche chemisch permanent mit Gruppen der allgemeinen Formel I oder I und III modifiziert.

Eine geeignete Methode zur Bewertung der Permanenz einer Modifizierung ist die quantitative Bestimmung von extrahierbarem, d.h. nicht chemisch an der Kieselsäureoberfläche gebundenem Silan. Die erfindungsgemäßen Kieselsäuren zeichnen sich dadurch aus, daß sie vorzugsweise einen extrahierbaren Anteil von weniger als 5 Gew.%, bevorzugt weniger als 2 Gew.%, besonders bevorzugt von weniger als 1 Gew.% aufweisen und in einer speziellen Ausführung sich kein extrahierbarer Anteil nachweisen läßt.

Vorzugsweise weist die modifizierte Kieselsäureoberfläche neben $T^3$-Gruppen auch $T^2$- und gegebenenfalls $T^1$-Gruppen auf. Der Anteil der Summe der NMR-Signalintensitäten der $T^1$- und $T^2$-Gruppen an der Gesamtintensität der T-Gruppen $T^1 + T^2 + T^3$ ist mindestens 20%, bevorzugt größer oder gleich 25%, besonders bevorzugt größer oder gleich 30% und in einer speziellen Ausführung größer oder gleich 35% der Gesamtintensität der T-Gruppen $T^1 + T^2 + T^3$.

Der relative Anteil der $T^1$-, $T^2$- und $T^3$-Gruppen läßt sich durch Festkörper-NMR-Spektroskopie im $^{29}$Si-CPMAS-Modus bestimmen. Dabei wird der relative Flächenanteil F der einzelnen Peaks aus den Einzelpeakflächen (PF) der entsprechenden Einzelsignale für die $T^1$-, $T^2$-, $T^3$-Gruppen relativ zur Gesamtpeakfläche der T-Gruppen bestimmt, d.h. z.B.

$$F(T^1) = c = PF(T^1)/PF(T^1)+PF(T^2)+PF(T^3),$$

wobei die Einzelpeakflächen (PF) durch Peakdekonvolution des Gesamtpeaks des entsprechenden Gruppensignals mittels Gauß-Fit zugänglich sind.

Für die anderen oben genannten Gruppen wird analog vorgegangen. Die chemische Verschiebung der einzelnen siliciumorganischen Gruppen im $^{29}$Si-NMR-Spektrum ist z.B. gegeben in D. W. Sindorf, G. E. Maciel, Journal of the American Chemical Society 1983, 105, 3767.

Vorzugsweise weisen die erfindungsgemäßen pyrogenen Kieselsäuren einen Kohlenstoffgehalt von 1 Gew.-% bis 20 Gew.-%, bevorzugt von 1 Gew.-% bis 15 Gew.-%, besonders bevorzugt von 1 Gew.-% bis 10 Gew.-% auf.

Ferner sind die erfindungsgemäßen pyrogenen Kieselsäuren dadurch charakterisiert, daß sie eine hohe positive triboelektrische Oberflächenladung $q_{trib}$ von +50 $\mu$C/g bis +1000 $\mu$C/g, bevorzugt von +75 $\mu$C/g bis +750 $\mu$C/g und besonders bevorzugt von +100 $\mu$C/g bis +500 $\mu$C/g aufweisen. Ferner sind die erfindungsgemäßen pyrogenen Kieselsäuren dadurch charakterisiert, daß die positive triboelektrische Oberflächenladung eine ausgezeichnete Prozeß-Stabilität aufweist. Dies bedeutet, daß die relative Abnahme der triboelektrischen Oberflächenladung $(q_{trib}(3600) - q_{trib}(150)) \times 100\% / q_{trib}(150)$ maximal 60%, bevorzugt maximal 55% und besonders bevorzugt maximal 50% beträgt, wobei $q_{trib}(3600)$ die triboelektrische Oberflächenladung nach 3600 s Aktivierungszeit und $q_{trib}(150)$ die triboelektrische Oberflächenladung nach 150 s Aktivierungszeit eines Gemisches aus einem Tonerpulver und der erfindungsgemäßen pyrogenen Kieselsäure bedeutet und $q_{trib}(150)$ größer 0 sein muß.

Ferner sind die erfindungsgemäßen pyrogenen Kieselsäuren dadurch charakterisiert, daß die positive triboelektrische Oberflächenladung eine ausgezeichnete Stabilität gegen hohe Luftfeuchtigkeit und Temperaturen aufweist. Dies bedeutet, daß die relative Abnahme der triboelektrischen Oberflächenladung $(q_{trib}(3600) - q_{trib}(150)) \times 100\% / q_{trib}(150)$ maximal 60%, bevorzugt maximal 55% und besonders bevorzugt maximal 50% beträgt, wobei $q_{trib}(3600)$ die triboelektrische Oberflächenladung nach 3600 s Aktivierungszeit und $q_{trib}(150)$ die triboelektrische Oberflächenladung nach 150 s Aktivierungszeit eines Gemisches aus einem Tonerpulver und der erfindungsgemäßen pyrogenen Kieselsäure bedeutet und $q_{trib}(150)$ größer 0 sein muß, wobei das Gemisch vor der Messung 5 d bei 32 °C und 80% rel. Luftfeuchtigkeit gelagert wurde.

Die erfindungsgemäßen Metalloxide weisen nach Desagglomeration beispielsweise mittels Sichtermühle oder Stiftmühle eine mittlere Agglomeratgröße $D_{50}$ von vorzugsweise kleiner 50 $\mu$m, bevorzugt kleiner 25 $\mu$m, besonders bevorzugt kleiner 20 $\mu$m und ganz besonders bevorzugt kleiner 15 $\mu$m auf.

Die erfindungsgemäßen Metalloxide weisen nach Desagglomeration beispielsweise mittels Sichtermühle oder Stiftmühle ferner eine enge Partikelgrößenverteilung der Agglomerate auf. Dies bedeutet, daß der Quotient aus dem $D_{95}$-Wert und dem $D_{50}$-Wert vorzugsweise kleiner als 3,0, bevorzugt kleiner oder gleich 2,5 und besonders bevorzugt kleiner oder gleich 2,0 ist.

Die Partikelgröße der Agglomerate wird dabei mittels Fraunhofer-Laserbeugung an einer ultraschallbehandelten Dispersion der Metalloxid-Partikel in i-Propanol bestimmt.

Die erfindungsgemäßen Metalloxide sind im weiteren dadurch gekennzeichnet, daß sie in pulverförmigen Systemen Verbackungen oder Verklumpungen, z.B. unter Feuchteeinfluß verhindern, aber auch nicht zur Reagglomeration neigen, und damit zur unerwünschten Separierung, sondern Pulver fließfähig erhalten und somit belastungsstabile und lagerstabile Mischungen ergeben. Dies gilt im besonderen für den Einsatz in nichtmagnetischen und magnetischen Tonern und Entwicklern und Ladungssteuerungshilfsmitteln, z.B. in kontaktlosen oder elektrofotografischen Druck-/Reproduktionsverfahren die 1- und 2-Komponenten Systeme sein können. Dies bedeutet, daß die Fließfähigkeit eines Gemisches aus einem Tonerpulver und dem erfindungsgemäßen Metalloxid nach 150 s Aktivierungszeit mindestens um den Faktor 1,1 besser ist als eine analog behandelte Blindprobe des Tonerpulvers ohne erfindungsgemäße Kieselsäure, bevorzugt ist die Fließfähigkeit um den Faktor 1,2 besser und besonders bevorzugt ist die Fließfähigkeit um den Faktor 1,3 besser, wobei die Fließfähigkeit mittels eines Q/m-mono-Meßgerätes der Fa. Epping GmbH, D-85375 Neufahrn, durch Differenzwägung nach oben genannter Aktivierungszeit bestimmt wird.

Dies gilt auch in pulverförmigen Harzen, die als Beschichtungssysteme verwendet werden.

Die Erfindung betrifft ferner den Einsatz der erfindungsgemäßen Matalloxide in Systemen von niedriger bis hoher Polarität als viskositätsgebende Komponente. Dies betrifft alle lösemittelfreie, lösemittelhaltige, filmbildende Anstrichmittel, gummiartige bis harte Beschichtungen, Klebstoffe, Versiegelungs- und Vergußmassen sowie andere vergleichbare Systeme.

Die erfindungsgemäßen Metalloxide können eingesetzt werden in Systemen, wie:

- Epoxidsysteme
- Polyurethansysteme (PUR)
- Vinylesterharze
- Ungesättigte Polyesterharze
- Lösemittelarme Harzsysteme, sogenannte "high solids".
- Lösemittelfreie Harze, die in Pulverform z.B. als Beschichtungsstoffe appliziert werden.

Die erfindungsgemäßen Metalloxide liefern als rheologisches Additiv in diesen Systemen die erforderte notwendige Viskosität, Strukturviskosität, Thixotropie und eine für das Standvermögen an senkrechten Flächen ausreichende Fließgrenze.

Die erfindungsgemäßen Metalloxide können speziell eingesetzt werden als rheologisches Additiv und Verstärkerfüllstoff in unvernetzten und vernetzten Siliconsystemen, wie Siliconelastomere, die aus Siliconpolymeren, wie Polydimethylsiloxanen, Füllstoffen, und weiteren Additiven zusammengesetzt sind. Diese können z.B. mit Peroxiden vernetzt werden, oder über Additions-Reaktionen, die sogenannte Hydrosilylierungsreaktion, zwischen olefinischen Gruppen und Si-H Gruppen vernetzt werden, oder über Kondensationsreaktionen zwischen Silanolgruppen, z.B. solche, die unter Wassereinwirkung entstehen.

Die erfindungsgemäßen Metalloxide können ferner speziell eingesetzt werden als Verstärkerfüllstoff in lösungsmittelbasierenden, lösungsmittelfreien und wasserbasierenden Beschichtungen, Klebstoffen, Versiegelungs- und Vergußmassen sowie anderen vergleichbaren Systemen zur Verbesserung der mechanischen Eigenschaften des ausgehärteten Systems. Dabei lassen sich aufgrund der speziellen Eigenschaften der erfindungsgemäßen Metalloxide hohe Füllgrade an Metalloxiden in den ungehärteten Systemen realisieren, ohne daß die Viskosität übermäßig ansteigt.

Ein weiterer Gegenstand der Erfindung sind Toner, Entwickler und Ladungssteuerungshilfsmittel, die die erfindungsgemäßen Metalloxide enthalten. Derartige Entwickler und Toner sind z.B. magnetische 1-Komponenten und 2-Komponenten Toner, aber auch nichtmagnetische Toner. Diese Toner können aus Harzen, wie Styrol- und Acrylharze bestehen, und bevorzugt zu Partikelverteilungen von 1-100 $\mu$m vermahlen sein, oder können Harze sein, die in Polymerisationsverfahren in Dispersion oder Emulsion oder Lösung oder in Masse zu Partikelverteilungen von bevorzugt 1 - 100 $\mu$m hergestellt wurden. Die erfindungsgemäßen Kieselsäuren werden bevorzugt eingesetzt zur Verbesserung und Steuerung des Pulver-Fließverhaltens, und / oder zur Regulierung und Steuerung der triboelektrischen Ladungseigenschaften des Toners oder Entwicklers. Derartige Toner und Entwickler können eingesetzt werden bevorzugt bei elektrophotografischen Print- und Druckverfahren, auch sind sie einsetzbar bei direkten Bildübertragungsverfahren.

Ein Toner hat typischerweise folgende Zusammensetzung

- Fest-Harz als Binder, das ausreichend hart ist, um ein Pulver hieraus herzustellen, vorzugsweise mit einem Molekulargewicht über 10000, bevorzugt mit einem Anteil an Polymeren von einem Molekulargewicht unter 10000 von weniger als 10%, z.B. ein Polyesterharz, das ein Co-Kondensat aus Diol und Carbonsäure, - ester, oder -anhydrid sein kann, z.B. mit einer Säurezahl von 1-1000, bevorzugt 5-200, oder ein Polyacrylat oder ein Polystyrol, oder Mischungen, oder Co-Polymerisate hieraus sein kann, und mit einem mittleren Partikeldurchmesser kleiner 20 $\mu$m, bevorzugt kleiner 15 $\mu$m, besonders bevorzugt kleiner 10 $\mu$m.

Das Tonerharz kann

- Alkohole, Carbonsäuren und Polycarbonsäure

- Technisch übliche Farbstoffe, wie schwarzer Ruß, Farb-Ruß, Cyan-Farbstoffe, Magenta-Farbstoffe, Gelbe Farbstoffe

- Typischerweise positive Ladungssteuerungsmittel, wie Ladungssteuernde Additive z.B. vom Typ Nigrosin-Farbstoff, oder Triphenylmethan Farbstoffe substituiert mit tertiären Aminen, oder quaternäre Amoniumsalze wie CTAB (cetyltrimethylammonium bromide = hexadecyltrimethylammoniumbromide), oder Polyamine, typischerweise kleiner 5 Gew.%

- Wahlweise negative Ladungssteuerungsmittel, wie Ladungssteuernde Additive wie Metall-haltige Azo-Farbstoffe, oder Kupfer-Phthalocyanin Farbstoffe, oder Metall-Komplexe zum Beispiel von alkylierten Salicylsäure-Derivaten oder Benzoesäure, insbesondere mit Bor oder Aluminium, in den erforderlichen Mengen, typischerweise kleiner 5 Gew.% enthalten.

- Gegebenenfalls können, zur Herstellung magnetischer Toner, magnetische Pulver zugesetzt werden, wie z.B. Pulver, die in einem magnetischen Feld magnetisiert werden können, wie ferromagnetische Substanzen, wie Eisen, Kobalt, Nickel, Legierungen, oder Verbindungen wie Magnetit, Hermatit oder Ferrit.

- Wahlweise können auch Entwickler zugesetzt werden, wie Eisenpulver, Glaspulver, Nickelpulver, Ferritpulver.

- Erfindungsgemäße Metalloxide in Gehalten, bezogen auf ein Fest-Harz als Binder mit 20 $\mu$m mittlerem Partikeldurchmesser, von vorzugsweise größer 0,01 Gew.%, bevorzugt größer 0,1 Gew.%. Mit abnehmendem mittlerem Partikeldurchmesser des Binders werden i.a. höhere Gehalte an Metalloxid erforderlich, wobei die notwendige Menge an Metalloxid umgekehrt proportional zum Partikeldurchmesser des Binders zunimmt. Der Gehalt an Metalloxid ist vorzugsweise jedoch in jedem Fall kleiner 5 Gew.% bezogen auf Binder-Harz.

- Weitere anorganische Zusätze, wie feinteilige und grobteilige Siliiciumdioxide, darunter auch solche mit vorzugsweise 100 bis 1000 nm mittlere Durchmesser, Aluminiumoxide, wie pyrogene Aluminiumoxide, Titandioxide, wie pyrogene oder Anatas oder Rutile, Zirkonoxide können enthalten sein.

- Wachse, wie paraffinische Waxe mit 10-500 C-Atomen, Siliconwachse, olefinische Wachse, Wachse mit einer Jodzahl kleiner 50, bevorzugt kleiner 25, und einer Verseifungszahl von vorzugsweise 10-1000, bevorzugt 25-300 können enthalten sein.

Der Toner kann in verschiedenen Entwicklungsverfahren eingesetzt werden, wie zur elektrophotografischen Bilderzeugung und Reproduktion, wie z.B. magnetische Bürsten-Verfahren, Kaskaden Verfahren, Einsatz von leitfähigen und nicht leitfähigen magnetischen Systemen, Pulverwolkenverfahren, Entwicklung in Abdruck, und andere.
Alle vorstehenden Symbole der vorstehenden Formeln weisen ihre Bedeutungen jeweils unabhängig voneinander auf.

**Beispiele**

**Beispiel 1**

Bei einer Temperatur von 25 °C unter Inertgas $N_2$ werden zu 100 g einer mit Dimethylsiloxygruppen modifizierten hydrophoben KIESELSÄURE, mit einer Feuchte kleiner 0,5%, einem Kohlenstoffgehalt von ca. 2% und einem Modifizierungsgrad von ca. 50% und mit einer spezifischen Oberfläche der Ausgangskieselsäure von 300 $m^2$/g (gemessen nach der BET Methode nach DIN EN ISO 9277/DIN 66132) (erhältlich unter dem Namen HDK® H30 bei Wacker Chemie AG, München, D), durch Verdüsen über eine Einstoffdüse (Druck 5 bar), 12 g Cyclohexylaminopropyltrimethoxysilan zugefügt. Die so beladene KIESELSÄURE wird bei einer Verweilzeit von 0,25 Stunden bei einer Temperatur von 25 °C weiter mittels Rühren fluidisiert, und anschließend in einem 100 1 Trockenschrank unter $N_2$ 1 h bei 80 °C und 2 h bei 150 °C zur Reaktion gebracht.
Die Analysedaten sind in Tabelle 1 aufgeführt.

**Beispiel 2 (Vergleichsbeispiel; nicht erfindungsgemäß)**

Bei einer Temperatur von 25 °C unter Inertgas $N_2$ werden zu 100 g einer mit Dimethylsiloxygruppen modifizierten hydrophoben KIESELSÄURE, mit einer Feuchte kleiner 0,5%, einem Kohlenstoffgehalt von ca. 2% und einem Modifizierungsgrad von ca. 50% und mit einer spezifischen Oberfläche der Ausgangskieselsäure von 300 $m^2$/g (gemessen

nach der BET Methode nach DIN EN ISO 9277/DIN 66132) (erhältlich unter dem Namen WACKER HDK® H30 bei Wacker Chemie AG, München, D), durch Verdüsen über eine Einstoffdüse (Druck 5 bar), 5 g Wasser und anschließend 12 g Cyclohexylaminopropyltrimethoxysilan zugefügt. Die so beladene KIESELSÄURE wird bei einer Verweilzeit von 0,25 Stunden bei einer Temperatur von 25 °C weiter mittels Rühren fluidisiert, und anschließend in einem 100 1 Trockenschrank unter $N_2$ 1 h bei 80 °C und 2 h bei 150 °C zur Reaktion gebracht.
Die Analysedaten sind in Tabelle 1 aufgeführt.

**Beispiel 3**

Bei einer Temperatur von 25 °C unter Inertgas $N_2$ werden zu 100 g einer mit Dimethylsiloxygruppen modifizierten hydrophoben KIESELSÄURE, mit einer Feuchte kleiner 0,5%, einem Kohlenstoffgehalt von ca. 1% und einem Modifizierungsgrad von ca. 50% und mit einer spezifischen Oberfläche der Ausgangskieselsäure von 150 $m^2/g$ (gemessen nach der BET Methode nach DIN EN ISO 9277/DIN 66132) (erhältlich unter dem Namen HDK® H15 bei Wacker Chemie AG, München, D), durch Verdüsen über eine Einstoffdüse (Druck 5 bar), 6 g

Cyclohexylaminopropyltrimethoxysilan zugefügt. Die so beladene KIESELSÄURE wird bei einer Verweilzeit von 0,25 Stunden bei einer Temperatur von 25 °C weiter mittels Rühren fluidisiert, und anschließend in einem 100 1 Trockenschrank unter $N_2$ 1 h bei 80 °C und 2 h bei 150 °C zur Reaktion gebracht.
Die Analysedaten sind in Tabelle 1 aufgeführt.

**Beispiel 4**

Bei einer Temperatur von 25 °C unter Inertgas $N_2$ werden zu 100 g einer hydrophilen KIESELSÄURE, mit einer Feuchte kleiner 0,5% und mit einer spezifischen Oberfläche von 300 $m^2/g$ (gemessen nach der BET Methode nach DIN EN ISO 9277/DIN 66132) (erhältlich unter dem Namen HDK® T30 bei Wacker Chemie AG, München, D), durch Verdüsen über eine Einstoffdüse (Druck 5 bar), 16 g Aminopropyltrimethoxysilan zugefügt. Die so beladene KIESELSÄURE wird bei einer Verweilzeit von 0,25 Stunden bei

einer Temperatur von 25 °C weiter mittels Rühren fluidisiert, und anschließend in einem 100 1 Trockenschrank unter $N_2$ 1 h bei 80 °C und 2 h bei 150 °C zur Reaktion gebracht.
Die Analysedaten sind in Tabelle 1 aufgeführt.

**Beispiel 5 (Vergleichsbeispiel; nicht erfindungsgemäß)**

Bei einer Temperatur von 25 °C unter Inertgas $N_2$ werden zu 100 g einer hydrophilen KIESELSÄURE, mit einer Feuchte kleiner 0,5% und mit einer spezifischen Oberfläche von 300 $m^2/g$ (gemessen nach der BET Methode nach DIN EN ISO 9277/DIN 66132) (erhältlich unter dem Namen HDK® T30 bei Wacker Chemie AG, München, D), durch Verdüsen über eine Einstoffdüse (Druck 5 bar), 5 g Wasser und anschließend 16 g Aminopropyltrimethoxysilan zugefügt. Die so beladene KIESELSÄURE wird bei einer Verweilzeit von 0,25 Stunden bei einer Temperatur von 25 °C weiter mittels Rühren fluidisiert, und anschließend in einem 100 1 Trockenschrank unter $N_2$ 1 h bei 80 °C und 2 h bei 150 °C zur Reaktion gebracht.
Die Analysedaten sind in Tabelle 1 aufgeführt.

**Beispiel 6:**

In einem 2 1-Dreihalskolben unter Argon als Schutzgas werden 800 ml Hexamethyldisiloxan vorgelegt und anschließend 50 g einer mit Dimethylsiloxygruppen modifizierten hydrophoben KIESELSÄURE, mit einer Feuchte kleiner 0,5%, einem Kohlenstoffgehalt von ca. 2% und einem Modifizierungsgrad von ca. 50% und mit einer spezifischen Oberfläche der Ausgangskieselsäure von 300 $m^2/g$ (gemessen nach der BET Methode nach DIN EN ISO 9277/DIN 66132) (erhältlich unter dem Namen HDK® H30 bei Wacker Chemie AG, München, D), 6 g Cyclohexylaminopropyltrimethoxysilan zugegeben. Die Suspension wird 2 h unter Rückfluß erhitzt und nach dem Abkühlen auf Raumtemperatur das Lösungsmittel bei vermindertem Druck entfernt. Anschließend wird der pulverförmige Rückstand bei einer Gesamtverweilzeit von 3 Stunden 1 h bei 100 °C und anschließend 2 h bei 150 °C in einem 100 1 Trockenschrank unter $N_2$ zur Reaktion gebracht.
Die Analysendaten sind in Tabelle 1 aufgeführt.

**Beispiel 7:**

In einer kontinuierlichen Anlage werden bei einer Temperatur von 50 °C unter Inertgas $N_2$ 15 kg/h einer mit Dimethylsiloxygruppen modifizierten hydrophoben KIESELSÄURE, mit einer Feuchte kleiner 0,5%, einem Kohlenstoffgehalt von ca. 2% und einem Modifizierungsgrad von ca. 50% und mit einer spezifischen Oberfläche der Ausgangskieselsäure von 300 $m^2$/g (gemessen nach der BET Methode nach DIN EN ISO 9277/DIN 66132) (erhältlich unter dem Namen HDK® H30 bei Wacker Chemie AG, München, D), durch Verdüsen über eine Zweistoffdüse, mit 1,8 kg/h Cyclohexylaminopropyltrimethoxysilan vermischt. Die so beladene KIESELSÄURE wird durch einen Reaktor mit einer Eintrittstemperatur von 50 °C und einer Endtemperatur von 80 °C gefördert und dabei zur Reaktion gebracht. Die Verweilzeit im Temperaturgradientenfeld beträgt dabei ca. 2 h. Anschließend wird die Kieselsäure in einem Trockner bei 120 °C getrocknet.
Die Analysedaten sind in Tabelle 1 aufgeführt.

| Beispiel | %C | F(T1+T2) *) % | $q_{trib}$ µC/g | $\Delta q_{rel}$ / % | extr. Anteil % |
|---|---|---|---|---|---|
| 1 | 7,4 | 37,0 | +196 | 34 | kleiner 0,05 |
| 2 | 6,9 | 0,0 | -472 | neg. | kleiner 0,05 |
| 3 | 2,7 | 42,1 | +194 | 29 | kleiner 0,05 |
| 4 | 4,6 | 66,7 | +94 | 49 | kleiner 0,05 |
| 5 | 4,3 | 5,3 | -100 | neg. | kleiner 0,05 |
| 6 | 6,0 | 60,8 | +336 | 15 | 0,2 |
| 7 | 6,4 | 45,5 | +372 | 20 | kleiner 0,05 |
| *) Gemessen im CPMAS-Modus | | | | | |

**Beschreibung der Analysenmethoden**

**1. Kohlenstoffgehalt (%C)**

Elementaranalyse auf Kohlenstoff; Verbrennen der Probe bei über 1000°C im $O_2$-Strom, Detektion und Quantifizierung des entstehenden $CO_2$ mit IR; Gerät LECO 244

**2. Triboelektrische Ladung $q_{trib}$ (µC/g)**

Unbeschichtetes Eisenpulver ($d_{50}$ = 172 µm) wird mit 1% Kieselsäure versetzt und in einer PE-Flasche durch 50-maliges Schütteln vermischt. Im Anschluß wird die PE-Flasche für 5 min auf einer Aktivierungseinheit oder auch Rollenbock (Fa. Epping) gegeben. Zur Messung wird eine definierte Menge der Fe-Pulver-Kieselsäure-Mischung in die hochisolierte Metallzelle eines q/m-Meters (Fa. EPPING GmbH, D-85375 Neufahrn bei Freising) gegeben und vermessen, wobei folgende Parameter verwendet wurden:

Siebmaterial: Edelstahl
Siebmaschenweite oben und unten: 45 µm
Druckluft: 2,4 bar; 1 Liter/Minute
Vakuum: kleiner 900 mbar

**3. Relative Abnahme der triboelektrischen Oberflächenladung**

$$\Delta q_{rel}\ \Delta q_{rel} = (q_{trib}(3600) - q_{trib}(150)) \times 100\% / q_{trib}(150),$$

wobei $q_{trib}$(3600) die triboelektrische Oberflächenladung nach 3600 s Aktivierungszeit und $q_{trib}$(150) die triboelektrische Oberflächenladung nach 150 s Aktivierungszeit eines Gemisches aus einem Tonerpulver und des erfindungsgemäßen Metalloxids bedeutet und $q_{trib}$(150) größer 0 sein muß. Zur Messung werden ein handelsüblicher 1-K-Toner (magnetisch; Polystyrolacrylat; d50 = 14,2 µm) mit 0,8% Kieselsäure versetzt und für 2 Stunden im Turbula (Fa. Willy A. Bachofen AG Maschinenfabrik, CH-4058 Basel) bei 20 U/min gemischt. Eine definierte Menge der Toner/Kieselsäure-Mischung wird auf die Aktivierungswalze eines Q/m-mono Meßgerätes (Fa. EPPING GmbH, D-85375 Neufahrn bei Freising) aufgebracht und nach den 150 s bzw. 3600 s Aktivierungszeiten die triboelektrische Ladung gemessen.

Dabei gelten folgende Meßbedingungen:

Meßzellen Abstand: 0,3 mm
Luftdurchfluß: 100 ml/min
Meßzeit 15 sec.

### 4. Extrahierbarer Anteil

25 g Kieselsäure werden mit einem Spatel in 100 g THF eingearbeitet und anschließend unter Eiskühlung mit dem Dissolver Dispermat CA-40-C (Fa. Getzmann) mit Zahnscheibe 40 mm zu flüssiger Konsistenz verrührt, anschließend 60 s bei 8400 UpM geschert, dann 60 min mit Ultraschall equilibriert und nach 2 Tagen wird über eine Druckfiltration klares Filtrat abgetrennt. Das Filtrat wird mittels Atomabsorptionsspektroskopie (AAS) auf Siliciumgehalt untersucht. Nachweisgrenze kleiner 100 ppm Organosiliciumverbindungen bezogen auf Kieselsäure.

## Patentansprüche

1. Pyrogene Kieselsäuren, die mit Gruppen der allgemeinen Formel (I)

$$-O_{1+n}-Si(OR^1)_{2-n}-R^2-NR^3_2 \qquad (I)$$

modifiziert sind, wobei
n 0, 1, 2 sein kann, wobei

**$R^1$** ein Wasserstoffatom oder ein C-0 gebundener $C_1$-$C_{15}$-Kohlenwasserstoff-Rest, oder ein Acetylrest sein kann,
**$R^2$** eine Methylengruppe (-CH2-), Ethylengruppe (-C2H4-), 1, 3-Propylgruppe (-C3H6-) oder Phenylengruppe (-C6H4-) sein kann,
**$R^3$** ein Wasserstoffatom oder einen gegebenenfalls mit -CN,-NCO, -$NR^4_2$, -COOH, -COOR**$^4$**, -Halogen, -Acryl, -Epoxy, -SH, -OH oder -CONR**$^4_2$** substituierter, gegebenenfalls einfach oder mehrfach ungesättigter N-C gebundener, einwertiger, gegebenenfalls zweiwertiger, $C_1$-$C_{20}$-Kohlenwasserstoffrest, oder ein Arylrest, oder $C_1$-$C_{15}$-Kohlenwasserstoffoxyrest in denen jeweils eine oder mehrere, einander nicht benachbarte Methyleneinheiten durch Gruppen -O-, -CO-, -COO-, -OCO-, oder -OCOO-, -S-, oder -$NR^4$- ersetzt sein können und in denen eine oder mehrere, einander nicht benachbarte Methineinheiten durch Gruppen, -N=,-N=N-,oder -P= ersetzt sein können, wobei $R^3$ gleich oder verschieden sein kann, oder die Amingruppe -$N(R^3)_2$ auch Teil eines aliphatischen oder aromatischen Heterocyclus sein kann,
**$R^4$** die gleiche Bedeutung wie $R^1$ hat und $R^4$ gleich oder verschieden sein kann,

**dadurch gekennzeichnet, dass** sie eine positive triboelektrische Oberflächenladung $q_{trib}$ von +50 μC/g bis +1000 μC/g und eine relative Abnahme der triboelektrischen Oberflächenladung $(q_{trib}(3600) - q_{trib}(150)) \times 100\% / q_{trib}(150)$ von maximal 60% aufweisen, wobei $q_{trib}(3600)$ die triboelektrische Oberflächenladung nach 3600 s Aktivierungszeit und $q_{trib}(150)$ die triboelektrische Oberflächenladung nach 150 s Aktivierungszeit eines Gemisches aus einem Tonerpulver und des erfindungsgemäßen Metalloxids bedeutet und $q_{trib}(150)$ größer 0 sein muss, wobei das Gemisch vor der Messung 5 d bei 32 °C und 80% rel. Luftfeuchtigkeit gelagert wurde,
wobei die triboelektrische Oberflächenladung und deren relative Abnahme wie in der Beschreibung definiert bestimmt wurde,
wobei der Anteil der Summe der NMR-Signalintensitäten der $T^1$- und $T^2$-Gruppen an der Gesamtintensität der T-Gruppen $T^1 + T^2 + T^3$ mindestens 20% beträgt, wobei die T-Gruppen als
$T^1$: R-Si$(OR^1)_2$-O-Si
$T^2$: R-Si$(OR^1)$(-O-Si$)_2$
$T^3$: R-Si(-O-Si$)_3$, definiert sind, wobei sich der relative Anteil der $T^1$-, $T^2$- und $T^3$-Gruppen sich durch Festkörper-NMR-Spektroskopie im $^{29}$Si-CPMAS-Modus bestimmen lässt, wobei R eine beliebige organische Gruppe ist und $R^1$ ein Wasserstoffatom oder ein C-0 gebundener $C_1$-$C_{15}$-Kohlenwasserstoff-Rest, oder ein Acetylrest ist, herstellbar in einem Verfahren, in dem die Modifizierung der Metalloxide mit Organosilanen der allgemeinen Formel II

$$X_{1+n}Si(OR^1)_{2-n}-R^2-NR^3_2 \qquad (II)$$

in einer Menge von 1 Gew.-% bis 20 Gew-%, bezogen auf die Kieselsäure, pro einer eingesetzten hydrophilen KieselsäureOberfläche von 100 $m^2/g$ BET-Oberfläche wasserfrei erfolgt, wobei $R^1$, $R^2$, $R^3$, $R^4$ und n die oben

genannte Bedeutung haben, $R^1$ und $R^4$ identisch sein können und X = Halogen, Stickstoffrest, $OR^4$, $OCOR^4$, $O(CH_2)xOR^4$ und x = 1, 2, 3,
wobei die Belegung der Kieselsäure bei Temperaturen von 20 bis 80 °C erfolgt, bei einem Temperaturgradient im Bereich von 40 °C bis 180 °C zur Reaktion gebracht wird, wobei dies bedeutet, dass die Produkttemperatur zu Beginn der Reaktion in einem Bereich von 40 - 100 °C und weiterhin, dass die Produkttemperatur gegen Ende der Reaktion in einem Bereich von 80 - 180 °C liegt, mit der Maßgabe, dass die Produkttemperatur zu Beginn der Reaktion niedriger als gegen Ende der Reaktion ist, wobei die Reaktionstemperatur stufenweise erhöht wird und die Verweilzeit pro Reaktionstemperatur zwischen 5 min und 240 min liegt und der Temperaturgradient abhängig vom Ort (kontinuierlich) oder abhängig von der Zeit (diskontinuierlich) ist und die Abreinigung bei einer Reinigungstemperatur von 20 bis 200 °C erfolgt.

**2.** Toner, Entwickler, Pulverlacke und
Ladungssteuerungshilfsmittel, **dadurch gekennzeichnet, dass** pyrogene Kieselsäuren nach Anspruch 1 enthalten sind.

**3.** Pulverförmige Beschichtungsstoffe, **dadurch gekennzeichnet, dass** pyrogene Kieselsäuren nach Anspruch 1 enthalten sind.

## Claims

**1.** Pyrogenic silicas modified with groups of the general formula (I)

$$-O_{1+n}-Si(OR^1)_{2-n}-R^2-NR^3_2 \qquad (I)$$

in which
n may be 0, 1, 2, in which
**$R^1$** may be a hydrogen atom or a C-O-bonded $C_1$-$C_{15}$-hydrocarbon radical, or an acetyl radical,
**$R^2$** may be methylene group (-CH2-), ethylene group (-C2H4-), 1,3-propyl group (-C3H6-) or phenylene group (-C6H4-),
**$R^3$** a hydrogen atom or an optionally mono- or polyunsaturated N-C-bonded, monovalent, optionally divalent, $C_1$-$C_{20}$-hydrocarbon radical optionally substituted by -CN, -NCO, $-NR^4_2$, -COOH, $-COOR^4$, -halogen, -acryloyl, -epoxy, -SH, -OH or $-CONR^4_2$, or an aryl radical, or a $C_1$-$C_{15}$-hydrocarbon-oxy radical in which in each case one or more, non-neighboring methylene units may be replaced by groups -O-, -CO-, -COO-, -OCO- or -OCOO-, -S- or $-NR^4-$ and in which one or more, non-neighboring methine units may be replaced by groups -N=, -N=N- or -P=, it being possible for $R^3$ to be identical or different or for the amine group $-N(R^3)_2$ also to be part of an aliphatic or aromatic heterocycle,
**$R^4$** has the same meaning as $R^1$ and $R^4$ may be identical or different,
**characterized in that** they have a positive triboelectric surface charge $q_{trib}$ of from +50 $\mu$C/g to +1000 $\mu$C/g and a relative decrease in the triboelectric surface charge $(q_{trib}(3600) - q_{trib}(150)) \times 100\%/q_{trib}(150)$ of not more than 60%, $q_{trib}(3600)$ being the triboelectric surface charge after an activation time of 3600 s and $q_{trib}(150)$ being the triboelectric surface charge after an activation time of 150 s of a mixture of a toner powder and the metal oxide according to the invention and it being necessary for $q_{trib}(150)$ to be greater than 0, the mixture having been stored at 32°C and 80% relative humidity for 5 d prior to the measurement, the triboelectric surface charge and the relative decrease thereof having been determined as defined in the description,
the proportion of the sum of the NMR signal intensities of the $T^1$ and $T^2$ groups, based on the total intensity of the T groups $T^1 + T^2 + T^3$, being at least 20%, the T groups being defined as
$T^1$: $R-Si(OR^1)_2-O-Si$
$T^2$: $R-Si(OR^1)(-O-Si)_2$
$T^3$: $R-Si(-O-Si)_3$, it being possible for the relative proportion of the $T^1$, $T^2$ and $T^3$ groups to be determined by solid-state NMR spectroscopy in the $^{29}$Si-CPMAS mode, R being any desired organic group and $R^1$ being a hydrogen atom or a C-O-bonded $C_1$-$C_{15}$-hydrocarbon radical, or an acetyl radical, preparable in a process in which the modification of the metal oxides takes place under anhydrous conditions with organosilanes of the general formula II

$$X_{1+n}Si\ (OR^1)_{2-n}-R^2-NR^3_2 \qquad (II)$$

in an amount of 1% by weight to 20% by weight based on the silica, per hydrophilic silica surface area of 100 $m^2$/g BET surface area used,

$R^1$, $R^2$, $R^3$, $R^4$ and n being as defined above, it being possible for $R^1$ and $R^4$ to be identical and X = halogen, nitrogen radical, $OR^4$, $OCOR^4$, $O(CH_2)_XOR^4$ and x = 1, 2, 3, the coating of the silica taking place at temperatures of from 20 to 80°C, reaction being effected with a temperature gradient in the range from 40°C to 1800°C, this meaning that the product temperature at the beginning of the reaction is in a range of 40-100°C and furthermore that the product temperature toward the end of the reaction is in a range of 80-180°C, with the proviso that the product temperature at the beginning of the reaction is lower than toward the end of the reaction, the reaction temperature being increased stepwise and the residence time per reaction temperature being between 5 min and 240 min, and the temperature gradient being dependent on the location (continuous) or dependent on the time (batchwise) and the purification taking place at a purification temperature of from 20 to 200°C.

2. Toners, developers, powder coats and charge control auxiliaries, **characterized in that** pyrogenic silicas according to Claim 1 are present.

3. Pulverulent coating materials, **characterized in that** pyrogenic silicas according to Claim 1 are present.

## Revendications

1. Silices pyrogénées, qui sont modifiées avec des groupes de formule générale (I)

$$-O_{1+n}-Si(OR^1)_{2-n}-R^2-NR^3_2 \qquad (I)$$

où
n peut être 0, 1, 2, et où

**$R^1$** peut être un atome d'hydrogène ou un radical hydrocarboné en $C_1$-$C_{15}$ lié par une liaison C-O, ou un radical acétyle,
**$R^2$** peut être un groupe méthylène ($-CH_2-$), un groupe éthylène ($-C_2H_4-$), un groupe 1,3-propyle ($-C_3H_6-$) ou un groupe phénylène ($-C_6H_4-$),
**$R^3$** un atome d'hydrogène ou un radical hydrocarboné en $C_1$-$C_{20}$ monovalent, éventuellement divalent, lié par une liaison N-C, éventuellement une ou plusieurs fois insaturé, éventuellement substitué par -CN,-NCO, $-NR^4_2$, -COOH, $-COOR^4$, -halogène, -acryloyle,-époxy, -SH, -OH ou $-CONR^4_2$, ou un radical aryle, ou un radical hydrocarbyloxy en $C_1$-$C_{15}$, dans chacun desquels une ou plusieurs unités méthylène non contiguës peuvent être remplacées par des groupes -O-, -CO-, -COO-, -OCO-, ou -OCOO-, -S-, ou $-NR^4-$ et dans lesquels une ou plusieurs unités méthine non contiguës peuvent être remplacées par des groupes -N=, -N=N- ou -P=, $R^3$ pouvant être le même ou différent, ou le groupe amino $-N(R^3)_2$ pouvant également faire partie d'un hétérocycle aliphatique ou aromatique,
**$R^4$** a la même signification que R et $R^4$ peut être le même ou différent,

**caractérisées en ce qu'**elles présentent une charge superficielle triboélectrique positive $q_{trib}$ de +50 µC/g à +1000 µC/g et une diminution relative de la charge superficielle triboélectrique ($q_{trib}$(3600) - $q_{trib}$(150)) x 100 % / $q_{trib}$(150) d'au maximum 60 %, $q_{trib}$(3600) signifiant la charge superficielle triboélectrique après un temps d'activation de 3600 s et $q_{trib}$(150) signifiant la charge superficielle triboélectrique après un temps d'activation de 150 s d'un mélange d'une poudre de toner et de l'oxyde métallique selon l'invention et $q_{trib}$(150) devant être supérieure à 0, le mélange étant stocké avant la mesure pendant 5 d à 32 °C et 80 % d'humidité relative de l'air,
la charge superficielle triboélectrique et sa diminution relative ayant été déterminées comme défini dans la description,
la proportion de la somme des intensités de signaux de RMN des groupes $T^1$ et $T^2$ par rapport à l'intensité totale des groupes T T + $T^2$ + $T^3$, étant d'au moins 20 %, les groupes T étant définis par
$T^1$ : $R-Si(OR^1)_2-O-Si$
$T^2$ : $R-Si(OR^1)(-O-Si)_2$
$T^3$ : $R-Si(-O-Si)_3$,
la proportion relative des groupes $T^1$, $T^2$ et $T^3$ pouvant être déterminée par spectroscopie de RMN sur solides dans le mode $^{29}$Si-CPMAS, R étant un groupe organique quelconque et $R^1$ étant un atome d'hydrogène ou un radical hydrocarboné en $C_1$-$C_{15}$ lié par une liaison C-O, ou un radical acétyle, qui peut être préparé dans un procédé dans lequel la modification des oxydes métalliques s'effectue en milieu anhydre, avec des organosilanes de formule générale II

$$X_{1+n}Si\ (OR^1)_{2-n}-R^2-NR^3_2 \qquad (II)$$

en une quantité de 1 % en poids à 20 % en poids, par rapport à la silice, pour une surface de silice hydrophile utilisée ayant une surface BET de 100 $m^2/g$, $R^1$, $R^2$, $R^3$, $R^4$ et n ayant, la signification précédente, $R^1$ et $R^4$ pouvant être identiques et X = un atome d' halogène, un radical azoté, $OR^4$, $OCOR^4$ $O(CH_2)_xOR^4$ et x = 1, 2, 3, la charge de la silice s'effectuant à des températures de 20 à 80 °C, étant mise en réaction avec un gradient de température dans la plage de 40 °C à 180 °C, ce qui signifie que la température du produit au début de la réaction se situe dans une plage de 40 à 100 °C et en outre que la température du produit vers la fin de la réaction se situe dans une plage de 80 à 180 °C, étant entendu que la température du produit au début de la réaction est inférieure à celle vers la fin de la réaction, la température de réaction étant élevée graduellement et le temps de séjour par température de réaction étant compris entre 5 min et 240 min et le gradient de température étant fonction de la position (en mode continu) ou fonction du temps (en mode discontinu) et la purification s'effectuant à une température de purification de 20 à 200 °C.

2. Toners, développeurs, peintures en poudre et adjuvants régulateurs de charge, **caractérisés en ce que** des silices pyrogénées selon la revendication 1 sont contenues.

3. Matières de revêtement pulvérulentes, **caractérisées en ce que** des silices pyrogénées selon la revendication 1 sont contenues.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 3330380
- DE 3707226
- EP 686676 B1


### In der Beschreibung aufgeführte Nicht-Patentliteratur


- **G. W. SEARS.** *Anal. Chem.,* 1956, vol. 28, 1981
- **F. SAINT-MICHEL ; F. PIGNON ; A. MAGNIN.** *J. Colloid Interface Sci.,* 2003, vol. 267, 314
- **D. W. SINDORF ; G. E. MACIEL.** *Journal of the American Chemical Society,* 1983, vol. 105, 3767